# EUROPÄISCHE PATENTSCHRIFT

(11) **EP 2 427 678 B1**
(45) Veröffentlichungstag und Bekanntmachung des Hinweises auf die Patenterteilung: **20.03.2024**
(21) Anmeldenummer: 10721671.5
(22) Anmeldetag: 05.05.2010
(51) Int. Cl.: F16K 17/30, B05B 1/30, F16K 31/12, B05B 12/14, B05B 15/55

(54) **FLUIDVENTIL, INSBESONDERE RÜCKFÜHRVENTIL FÜR EINE LACKIERANLAGE**
FLUID VALVE, PARTICULARLY RETURN VALVE FOR A PAINTING SYSTEM
SOUPAPE À FLUIDE, EN PARTICULIER SOUPAPE DE RETOUR POUR UNE INSTALLATION DE MISE EN PEINTURE

(30) Priorität: 06.05.2009 DE 102009020064
(43) Veröffentlichungstag der Anmeldung: 14.03.2012
(73) Patentinhaber: Dürr Systems AG, 74321 Bietigheim-Bissingen (DE)
(72) Erfinder: MELCHER, Rainer, 71720 Oberstenfeld (DE); HERRE, Frank, 71739 Oberriexingen (DE); BAUMANN, Michael, 74223 Flein (DE); BUCK, Thomas, 74343 Sachsenheim (DE)
(74) Vertreter: v. Bezold & Partner Patentanwälte - PartG mbB
(86) Internationale Anmeldenummer: PCT/EP2010/002763
(87) Internationale Veröffentlichungsnummer: WO 2010/127849

(56) Entgegenhaltungen:
- EP-A1- 1 295 655
- WO-A1-92/01184
- GB-A- 2 159 243
- US-A- 266 462
- US-A- 4 465 093
- US-A1- 2005 221 147
- US-B1- 7 207 349

## Beschreibung

Die Erfindung betrifft ein Fluidventil, insbesondere ein Rückführventil, das in einer Lackieranlage dazu dient, bei z.B. einem Farbwechsel Restfarbe, Spülmittel, Farbschaum, Luft und/oder Druckluft aus einer Farbleitung, Andrückbereich, etc. in eine Rückführung zu leiten und/oder die stromabwärts fließende Farbe selbstständig vor dem Abfließen in die Rückführung zu stoppen.

WO 92/01184 A1 offenbart eine Sicherheitsschließvorrichtung für Gasrohrleitungen mit einem Ventil, welches gegen einen Ventilsitz in einem rohrförmigen Gehäuse pressbar ist. Das Ventil ist als in Achsrichtung des rohrförmigen Gehäuses verschiebliches Tellerventil entgegen der Kraft einer Feder verschieblich gelagert, wobei die Querschnittsfläche des Ventiltellers kleiner als der lichte Querschnitt des Gehäuses ausgebildet ist und in Abstand von der Innenwand des rohrförmigen Gehäuses gehalten ist und an der der Feder abgewandten Seite des Ventiltellers der Gaszuleitungsanschluss vorgesehen ist. Das Ventil schließt bei einem Druckabfall automatisch. GB 2 159 243 A offenbart ein Fluidventil mit einem flexiblen Diaphragma und einer Ventilstange, die an einem Ende einen Absperrkörper aufweist und am anderen Ende an eine Mutter geschraubt ist. Zum Stand der Technik ist ferner hinzuweisen auf die US 7 207 349 B1 und die US 4 465 093 B1.

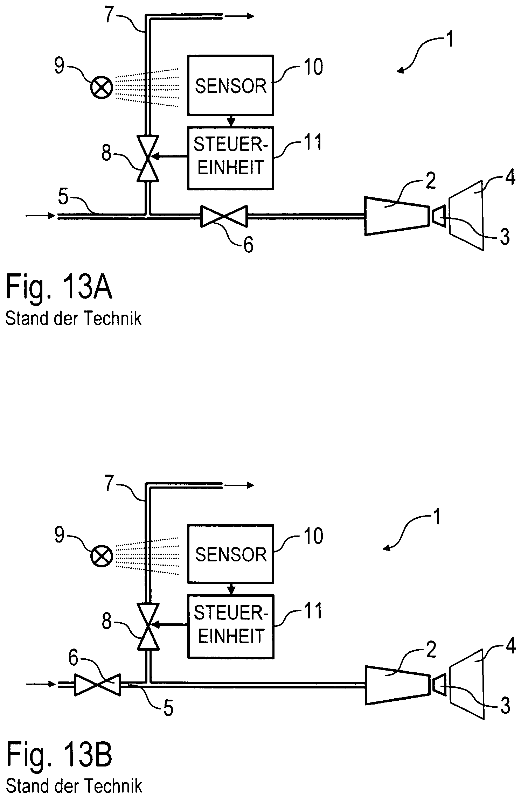

Figur 13A zeigt in stark vereinfachter Form eine herkömmliche Lackieranlage 1 zur Lackierung von Kraftfahrzeugkarosseriebauteilen, wobei die Lackieranlage 1 als Applikationsgerät einen Rotationszerstäuber 2 mit einem Glockenteller 3 aufweist, der im Betrieb einen Sprühstrahl 4 eines Lacks abgibt. Der Rotationszerstäuber 2 wird hierbei über eine Farbleitung 5 mit dem zu applizierenden Lack versorgt, wobei in der Farbleitung 5 ein Hauptnadelventil 6 angeordnet ist, das den Lackstrom zu dem Rotationszerstäuber 2 steuert und während eines Beschichtungsvorgangs geöffnet ist. Darüber hinaus weist die bekannte Lackieranlage 1 eine Rückführleitung 7 auf, in der ein Rückführventil 8 angeordnet ist, wobei die Rückführleitung 7 in eine Rückführung mündet, um die bei einem Farbwechsel anfallenden Reste (z.B. Spülmittel, Restfarbe, Farbschaum) aufzufangen und kostengünstig zu entsorgen.

Bei einem Farbwechsel der Lackieranlage 1 wird zunächst das Hauptnadelventil 6 geschlossen, wodurch der Lackstrom zu dem Rotationszerstäuber 2 unterbrochen wird. Anschließend wird das Rückführventil 8 geöffnet und die Farbleitung 5 wird mit einem Spülmittel und mit Pulsluft (Druckluftstößen) gereinigt, wobei die Reste des noch in der Farbleitung 5 verbliebenen Lacks über das geöffnete Rückführventil 8 und durch die Rückführleitung 7 in die Rückführung geleitet werden. Anschließend wird die Farbleitung 5 dann mit dem neuen Lack der gewünschten Farbe angedrückt, wobei das Hauptnadelventil 6 noch geschlossen ist, während das Rückführventil 8 geöffnet ist. Das Andrücken kann dann beendet werden, wenn in der Rückführleitung 7 stromabwärts hinter dem Rückführventil 8 kein Farbschaum oder Druckluft mehr austritt, sondern frische Farbe. Dies erkennt die Lackieranlage 1 in diesem Beispiel durch eine Lichtschranke, die aus einer Lichtquelle 9 und einem optischen Sensor 10 besteht, wobei die Lichtquelle 9 und der Sensor 10 auf gegenüberliegenden Seiten der in diesem Bereich durchsichtig ausgeführten Rückführleitung 7 angeordnet sind, so dass die Lichtschranke die Lichtdurchlässigkeit des hinter dem Rückführventil 8 austretenden Fluids erfasst. Während des Spülens der Farbleitung 5 strömt ein Gemisch aus Spülmittel, Restfarbe und Druckluft durch die Rückführleitung 7, wobei dieses Gemisch aufgrund des hohen Luftanteils relativ lichtdurchlässig ist. Nach dem Andrücken der Farbleitung 5 erscheint dagegen am Ausgang des Rückführventils 8 frischer Lack, der kaum Druckluft enthält und deshalb relativ lichtundurchlässig ist. Der Sensor 10 ist ausgangsseitig mit einer Steuereinheit 11 verbunden, die das Rückführventil 8 schließt, wenn die Lichtschranke detektiert, dass am Ausgang des Rückführventils 8 frischer Lack erscheint.

Figur 13B zeigt eine ebenfalls bekannte Abwandlung der Lackieranlage 1 gemäß Figur 13A mit dem Unterschied, dass die Rückführleitung 7 hierbei stromabwärts hinter dem Hauptnadelventil 6 von der Farbleitung 5 abzweigt.

Nachteilig an der vorstehend beschriebenen bekannten Lackieranlage 1 ist zunächst die Tatsache, dass die Rückführleitung 7 im Betrieb verschmutzen kann, so dass die Lichtschranke die Lichtdurchlässigkeit des durchströmenden Fluids nicht mehr erfassen kann.

Ein weiterer Nachteil der vorstehend beschriebenen herkömmlichen Lackieranlage 1 besteht in der Reaktionszeit zwischen dem Ansprechen des optischen Sensors 10 und dem Schließen des Rückführventils 8, wobei während der Reaktionszeit frischer Lack über die Rückführleitung 7 abgeleitet wird, was zu entsprechenden Farbverlusten führt.

Darüber hinaus benötigt die vorstehend beschriebene herkömmliche Lackieranlage 1 zur Steuerung des Rückführventils 8 zusätzliche Bauteile in Form der Lichtquelle 9 und des optischen Sensors 10, wodurch die Kosten von Herstellung und Inbetriebnahme steigen und die Störanfälligkeit zunimmt.

Darüber hinaus ist es aus dem Stand der Technik auch bekannt, das Rückführventil 8 bei einem Farbwechsel ohne eine Lichtschranke entsprechend einem vorgegebenen Zeitprogramm anzusteuern. Dabei wird davon ausgegangen, dass bei einem Farbwechsel nach einem Spülvorgang zu einem bestimmten Zeitpunkt der frische Lack in der Rückführleitung 7 stromabwärts hinter dem Rückführventil 8 erscheint.

Nachteilig an dieser bekannten Steuerung des Rückführventils 8 durch ein Zeitprogramm ist die Tatsache, dass die bei einem Farbwechsel zum Spülen und anschließenden Andrücken des frischen Lacks erforderliche Zeitspanne von der Viskosität des Lacks abhängt, so dass eine fehlerhaft eingestellte Viskosität oder Schwankungen der Viskosität zu einer Fehlsteuerung des Rückführventils 8 führen. Falls das Rückführventil 8 zu spät geschlossen wird, wird frischer Lack über die Rückführleitung 7 in die Rückführung abgeleitet, was mit entsprechenden Farbverlusten verbunden ist. Falls das Rückführventil 8 dagegen zu früh geschlossen wird, befinden sich in der Farbleitung 5 stromaufwärts vor dem Rückführventil 8 noch Reste des vorangegangenen Spülvorgangs, wodurch die Lackierqualität nach dem Öffnen des Hauptnadelventils 6 beeinträchtigt würde.

Der Erfindung liegt deshalb die Aufgabe zugrunde, die vorstehend beschriebene herkömmliche Lackieranlage 1 entsprechend zu verbessern, wobei insbesondere die Möglichkeit geschaffen werden soll, das Rückführventil 8 mit möglichst geringem Aufwand und möglichst genau bei einem Farbwechsel zu steuern.

Diese Aufgabe wird durch ein erfindungsgemäßes Rückführventil gemäß dem Hauptanspruch gelöst.

Die Erfindung umfasst die allgemeine technische Lehre, als Rückführventil ein Fluidventil einzusetzen, das in Abhängigkeit von dem eingangsseitig anstehenden Fluid eigenmediumbetätigt in die Schließstellung schaltet und/oder Einfluss auf das Durchflussverhalten nimmt (z.B. auf das Durchflussverhalten eines Fluids (vorzugsweise Restfarbe, Spülmittel, Luft und/oder Druckluft) durch das Ventil, wobei beispielsweise das Durchflussverhalten vorzugsweise die Fluidströmung, den Fluidfluss, den Fluiddurchsatz, eine Öffnungsstellung, eine Schließstellung und/oder eine oder mehrere Stellungen zwischen der Öffnungsstellung und der Schließstellung umfassen kann. Dies bedeutet, dass die Steuerung der Ventilstellung nicht fremdbetätigt durch einen Ventilantrieb erfolgt, sondern durch eine Eigenschaft, nämlich Viskosität, des eingangsseitig anstehenden Fluids. Diese allgemeine technische Lehre kann ferner z.B. auch genutzt werden, um einen Schließkraftverstärker in Abhängigkeit von dem eingangsseitig anstehenden Fluid eigenmediumbetätigt zu aktivieren, wodurch eine Schließkraftverstärkung erzielt bzw. aktiviert werden kann. Vorteilhaft kann ein Ventil bereitgestellt werden, das ein erstes Fluid (z.B. Restfarbe, Spülmittel, Farbschaum und Luft (z.B. Druckluft)) aus einer ersten Leitung (z.B. eine Farbleitung) bzw. einem ersten Bereich (z.B. ein Andrückbereich) selbst- bzw. eigenmediumbetätigt in eine zweite Leitung (z.B. eine Rückführung) leiten kann und/oder ein zweites Fluid (z.B. Farbe für die Beschichtung) selbst- bzw. eigenmediumbetätigt an dem Abfließen in die zweite Leitung hindern kann.

Das erfindungsgemäße Fluidventil weist eine Öffnungsstellung auf, in der das Fluidventil zumindest teilweise geöffnet ist, insbesondere zum Spülen der Farbleitung mit dem Spülmittel und zum Andrücken der Farbleitung mit einer neuen Farbe bei dem Farbwechsel.

Darüber hinaus weist das erfindungsgemäße Fluidventil eine Schließstellung auf, in der das Fluidventil geschlossen ist, insbesondere zum Applizieren der neuen Farbe nach dem Farbwechsel.

Das Fluidventil ist zwischen der Öffnungsstellung und der Schließstellung verstellbar, wobei die Verstellung eigenmediumbetätigt durch das eingangsseitig anstehende Fluid erfolgt.

Im Rahmen der Erfindung erfolgt zumindest der Schaltvorgang von der Öffnungsstellung in die Schließstellung eigenmediumbetätigt durch das eingangsseitig anstehende Fluid. Es ist jedoch auch möglich, dass die Schaltvorgänge in beiden Richtungen eigenmediumbetätigt vollzogen werden. Es besteht also im Rahmen der Erfindung auch die Möglichkeit, dass das Fluidventil eigenmediumbetätigt aus der Schließstellung in die Öffnungsstellung schaltet.

In einem bevorzugten Ausführungsbeispiel der Erfindung ist das Fluidventil ein Rückführventil in einer Lackieranlage, wie es bereits eingangs zum Stand der Technik beschrieben wurde, um bei einem Farbwechsel Restfarbe, Spülmittel, Farbschaum und Luft bzw. Druckluft aus der Farbleitung in eine Rückführung zu leiten. In dem bevorzugten Ausführungsbeispiel der Erfindung unterscheidet das Rückführventil konstruktionsbedingt zwischen einem ersten Medium (vorzugsweise ein Fluid) und einem anderen zweiten Medium (vorzugsweise ein anderes Fluid), insbesondere zwischen Farbe einerseits und Luft bzw. Druckluft, lufthaltigem Farbschaum und Spülmittel andererseits, wobei das Rückführventil z.B. selbständig und konstruktionsbedingt in die Schließstellung schaltet, wenn an dem Rückführventil eingangsseitig ein bestimmtes Medium, insbesondere frische Farbe ansteht. Es ist auch möglich, dass das Ventil konstruktionsbedingt zwischen einer Flüssigkeit (z.B. Spülmittel, (Rest-)Farbe, etc.) einerseits und einem gasförmigen Medium (z.B. Luft bzw. Druckluft) andererseits unterscheidet. Das erfindungsgemäße Rückführventil schaltet dagegen vorzugsweise selbständig und konstruktionsbedingt in die Öffnungsstellung und/oder verbleibt zumindest in der Öffnungsstellung, wenn an dem Rückführventil eingangsseitig Luft bzw. Druckluft oder Farbschaum ansteht. Diese eigenmediumbetätigte Steuerung des Rückführventils ermöglicht einen Verzicht auf einen externen Ventilantrieb und aufwendige Sensorik zur Unterscheidung zwischen dem frischen Lack einerseits und Spülmittel, Restfarbe und Luft bzw. Druckluft und Farbschaum andererseits. Die Erfindung ist jedoch nicht auf Ausführungsformen beschränkt, bei denen die Steuerung des Fluidventils ausschließlich eigenmediumbetätigt erfolgt. Es ist vielmehr im Rahmen der Erfindung auch möglich, dass die eigenmediumbetätigte Steuerung des Fluidventils mit einer Fremdsteuerung kombiniert wird, wie noch detailliert beschrieben wird.

Ferner kann die eigenmediumbetätigte Steuerung vorteilhaft zur Erzielung bzw. Aktivierung einer Schließkraftverstärkung genutzt werden. Beispielsweise kann das Fluid- bzw. Rückführventil vorgesehen werden, um selbständig und konstruktionsbedingt einen Schließkraftverstärker (der weiter unten detaillierter beschrieben wird) zu aktivieren, wenn an dem Fluid- bzw. Rückführventil eingangsseitig Farbe ansteht. Ferner ist es möglich, das Fluid- bzw. Rückführventil so vorzusehen, dass es selbständig und konstruktionsbedingt eine Arretierungsmechanik (die weiter unten detaillierter beschrieben wird) schalten bzw. steuern, insbesondere entriegeln, kann, wenn an dem Fluid- bzw. Rückführventil eingangsseitig Farbe ansteht, wodurch eine Schließkraftverstärkung erzielt bzw. aktiviert werden kann.

Erfindungsgemäß schaltet das Fluidventil aufgrund seiner eigenmediumbetätigten Steuerung in Abhängigkeit von der Viskosität des eingangsseitig anstehenden Fluids in die Schließstellung. So weist frischer Lack, der beim Andrücken an dem Rückführventil erscheint, eine größere Viskosität auf als der beim Spülen der Farbleitung entstehende lufthaltige Farbschaum.

In dem bevorzugten Ausführungsbeispiel der Erfindung ist das Fluidventil in der Öffnungsstellung maximal geöffnet, damit die Farbleitung mit einem maximal möglichen Spülmittelstrom gespült werden kann. Darüber hinaus kann das Fluidventil zusätzlich zu der Öffnungsstellung und der Schließstellung eine Wartestellung aufweisen, in der das Fluidventil zumindest teilweise geöffnet ist, beispielsweise zum Warten auf die neue Farbe beim Andrücken der neuen Farbe. Das erfindungsgemäße Fluidventil kann so ausgelegt sein, dass es nur aus der Wartestellung, aber nicht aus der Öffnungsstellung selbständig und eigenmediumbetätigt in die Schließstellung schaltet, wohingegen zum Umschalten aus der Öffnungsstellung eine externe Steuerung des Fluidventils erforderlich ist.

Bei einer derartigen konstruktiven Auslegung des Fluidventils mit drei Schaltzuständen (Öffnungsstellung, Wartestellung und Schließstellung) wird das Fluidventil bei einem Farbwechsel zunächst in die Öffnungsstellung geschaltet, damit die Farbleitung mit einem maximal möglichen Spülmittelstrom möglichst schnell gespült werden kann. Am Ende des Spülvorgangs und damit zu Beginn des Andrückens mit der neuen Farbe wird das Rückführventil dann aus der Öffnungsstellung in die Wartestellung geschaltet, wobei dieser Umschaltvorgang vorzugsweise durch eine externe Ventilsteuerung erfolgt. Am Ende des Andrückvorgangs erscheint dann schließlich am Eingang des Rückführventils frischer Lack, wodurch das Rückführventil eigenmediumbetätigt aus der Wartestellung in die Schließstellung schaltet.

Es wurde bereits vorstehend kurz erwähnt, dass die Erfindung nicht auf ein Fluidventil beschränkt ist, das ausschließlich eigenmediumbetätigt gesteuert wird. Vielmehr umfasst die Erfindung auch ein Fluidventil, das zusätzlich durch einen externen Ventilantrieb fremdbetätigt steuerbar ist, insbesondere fremdmediumbetätigt (z.B. durch Druckluft).

Das erfindungsgemäße Fluidventil weist deshalb vorzugsweise einen ersten Steuereingang auf, wobei es sich vorzugsweise um einen ersten Steuerluftanschluss handelt, über den Steuerluft zugeführt werden kann, um das Fluidventil fremdbetätigt in die Schließstellung zu schalten. Die über den ersten Steuerluftanschluss zugeführte Luft bzw. Druckluft kann hierbei dazu dienen, den eigenmediumbetätigten Schaltvorgang des Fluidventils zu unterstützen. Es besteht jedoch auch die Möglichkeit, dass das Fluidventil über den ersten Steuereingang unabhängig von dem eingangsseitig anstehenden Fluid in die Schließstellung geschaltet werden kann.

Darüber hinaus weist das erfindungsgemäße Fluidventil in einigen Ausführungsformen einen zweiten Steuereingang auf, über den das Fluidventil fremdbetätigt in die Öffnungsstellung geschaltet werden kann. Auch bei dem zweiten Steuereingang handelt es sich vorzugsweise um einen zweiten Steuerluftanschluss, über den Luft bzw. Druckluft zur Steuerung des Fluidventils zugeführt werden kann.

Erfindungsgemäß weist das Fluidventil einen Zylinder und einen in dem Zylinder verschiebbaren Kolben auf, wobei der Kolben einen Absperrkörper zwischen der Schließstellung und der Öffnungsstellung bewegen kann. Darüber hinaus weist das Fluidventil einen Ventilsitz auf, wobei der Absperrkörper den Ventilsitz in der Schließstellung verschließt, wohingegen der Absperrkörper den Ventilsitz in der Öffnungsstellung öffnet bzw. freigibt. Die Ventilbewegung wird hierbei also von dem Kolben angetrieben, der hierzu einseitig oder beidseitig mit Luft bzw. Druckluft beaufschlagt werden kann. Darüber hinaus kann der Kolben auch einseitig oder beidseitig mit einer Federkraft einer Feder beaufschlagt werden, um eine gewünschte Neutrallage einzustellen.

Darüber hinaus kann das Fluidventil im Rahmen der Erfindung einen Schließkraftverstärker aufweisen, der die eigenmediumbetätigte Schließkraft verstärkt, z.B. damit das Fluidventil möglichst schnell und/oder sicher schließt, wenn beim Andrücken der frischen Farbe eingangsseitig frische Farbe an dem Rückführventil erscheint.

Der Schließkraftverstärker kann beispielsweise fremdmediumbetätigt arbeiten, insbesondere mittels Luft bzw. Druckluft. Es ist jedoch alternativ auch möglich, dass der Schließkraftverstärker mittels einer Feder- und/oder Vorspannmechanik arbeitet, insbesondere die verstärkte Schließkraft mittels der Feder- und/oder Vorspannmechanik erzeugt.

Es ist möglich, dass der Schließkraftverstärker eine Arretierungsmechanik umfasst, die z.B. mit einem im Fluidventil angeordneten Anlage- bzw. Auflagerteil (z.B. einer Anlage- bzw. Anschlagplatte, einem Anlagering, etc.) eine Arretierung ausbilden kann. Das Anlageteil hat vorzugsweise eine zentrale Öffnung und ist z.B. vorgesehen, um am Umfangsrand bzw. benachbart zu der zentralen Öffnung einen Anlage-, Auflager- bzw. Arretierabschnitt bereitzustellen. Das Anlageteil kann vorzugsweise an einer Wandung des Zylinders bzw. einem Gehäuse des Fluid- bzw. Rückführventils befestigt sein.

Bei einem Ausführungsbeispiel ist die Arretierungsmechanik schaltbar bzw. steuerbar, insbesondere verriegelbar und/oder entriegelbar. Besonders bevorzugt kann die Arretierungsmechanik (bzw. die Arretierung) in Abhängigkeit von dem eingangsseitig anstehenden Fluid eigenmediumbetätigt gesteuert bzw. geschaltet, insbesondere entriegelt, werden, um die Schließkraftverstärkung zu erzielen bzw. zu aktivieren und/oder um die Schließstellung zu erzielen bzw. das Fluid- bzw. Rückführventil in die Schließstellung gelangen zu lassen.

Vorteilhaft ist es also möglich, dass durch ein an dem Ventil (z.B. an dem Absperrkörper des Ventils) anstehendes Fluid (z.B. frische Farbe, Lack, etc.) der Schließkraftverstärker aktiviert wird und/oder die Arretierungsmechanik entriegelt wird, um eine Schließkraftverstärkung zu erzielen bzw. zu aktiveren, insbesondere, indem durch das Entriegeln eine Federund/oder Vorspannmechanik (z.B. eine Spiral- bzw. Druckfeder) gelöst bzw. entspannt wird, wodurch der Absperrkörper schließkraftverstärkt an den Ventilsitz gedrückt werden kann.

Bei einem Ausführungsbeispiel kann die Arretierungsmechanik als Schnapp-, Rast- und/oder Klemm-Verbindungsmechanik ausgebildet werden.

Bei einem pneumatischen Schließkraftverstärker weist der Schließkraftverstärker vorzugsweise ein Verstärkungsventil auf, das den in den Zylinder mündenden und zum Schließen des Fluidventils dienenden ersten Steuerluftanschluss wahlweise öffnet oder schließt, wobei der Schließkraftverstärker das Verstärkungsventil öffnet, wenn die eigenmediumbetätigte Steuerung des Fluidventils zu einem geringfügigen Schließen des Fluidventils führt, woraufhin dann die Kraftunterstützung durch den ersten Steuerluftanschluss einsetzt und die Schließkraft verstärkt.

In einem Ausführungsbeispiel des Schließkraftverstärkers ist das Verstärkungsventil ein Schieberventil, das einen Ventilschieber aufweist, der mit dem Kolben gekoppelt ist, so dass eine Kolbenbewegung zu einer entsprechenden Bewegung des Ventilschiebers führt. Der Schließkraftverstärker ist hierbei so ausgelegt, dass der Ventilschieber den ersten Steuerluftanschluss verschließt, wenn sich der Kolben des Fluidventils in der Öffnungsstellung befindet. Dies bedeutet, dass in der Öffnungsstellung des Fluidventils keine Kraftunterstützung wirkt. Der Schließkraftverstärker ist dagegen so ausgelegt, dass der Ventilschieber den ersten Steuerluftanschluss freigibt, wenn sich der Kolben für einen Bruchteil seines Hubs aus der Öffnungsstellung in Richtung der Schließstellung bewegt hat, so dass dann die Kraftverstärkung wirkt. Bei einer Schließbewegung des Fluidventils wirkt die Schließkraftunterstützung also noch nicht in der Öffnungsstellung, sondern erst, wenn sich der Kolben geringfügig aus der Öffnungsstellung in Richtung der Schließstellung bewegt hat.

Hierbei besteht wahlweise die Möglichkeit, dass der zum Schließen des Fluidventils dienende erste Steuerluftanschluss radial oder axial in die Mantelfläche des Zylinders mündet.

Bei einer axialen Einmündung des ersten Steuerluftanschlusses in den Zylinder wird der erste Steuerluftanschluss vorzugsweise von dem Kolben unmittelbar oder mittelbar verschlossen bzw. geöffnet, wobei die Mündungsöffnung des ersten Steuerluftanschlusses einen kleineren Querschnitt aufweist als der Kolben, wobei das Verhältnis der Querschnitte den Kraftverstärkungsfaktor definiert. Die Schließkraftverstärkung beruht hierbei darauf, dass der an dem ersten Steuerluftanschluss anliegende Luftdruck bei geschlossener Mündungsöffnung des ersten Steuerluftanschlusses nur auf eine relativ kleine Fläche wirkt und deshalb auch nur eine relativ kleine Kraft erzeugt. Nach dem Öffnen der Mündungsöffnung des ersten Steuerluftanschlusses wirkt der an dem ersten Steuerluftanschluss anliegenden Luftdruck dagegen auf die gesamte Kolbenfläche, die wesentlich größer ist als die Mündungsöffnung des ersten Steuerluftanschlusses, so dass auch die auf den Kolben wirkende Schließkraft entsprechend größer ist.

Weiterhin besteht im Rahmen der Erfindung die Möglichkeit, dass der Schließkraftverstärker ein druckgesteuertes Vorsteuerventil aufweist, wobei das Vorsteuerventil eine erste Steuerluftleitung mit dem ersten Steuerluftanschluss des Fluidventils verbindet, so dass der Druck in der ersten Steuerluftleitung die Schließbewegung des Fluidventils unterstützt, wenn das Vorsteuerventil geöffnet ist. Das Vorsteuerventil wird hierbei in Abhängigkeit von dem in der Zuleitung des Fluidventils fließenden Fluid gesteuert. Hierzu weist das Vorsteuerventil vorzugsweise einen Steuereingang auf, der mit der Zuleitung des Fluidventils verbunden ist, so dass das Vorsteuerventil öffnet, wenn sich am Ende des Andruckvorgangs ein Druck in der Zuleitung des Fluidventils aufbaut.

Erfindungsgemäß ist das Fluidventil als Membranventil ausgebildet und weist eine elastische Membran auf, die einen Absperrkörper trägt. Der mit der Membran verbundene Absperrkörper des Fluidventils kann hierbei mechanisch mit einem Kolben verbunden sein, wie er bereits vorstehend beschrieben wurde. Der Kolben ermöglicht dann eine externe Steuerung des Fluidventils in die Schließstellung und/oder in die Öffnungsstellung.

Weiterhin besteht im Rahmen der Erfindung die Möglichkeit, dass das Fluidventil einen Absperrkörper vorzugsweise mit einer Lochscheibe aufweist, wobei in der Lochscheibe auch schlitzförmige Löcher angeordnet sein können. Die Größe der Löcher in der Lochscheibe ist hierbei so bemessen, dass in Abhängigkeit von der Viskosität des eingangsseitig anstehenden Fluids eine bestimmte Schließkraft erzeugt wird, die beim Überschreiten einer bestimmten Viskositätsgrenze zu einem Schließen des Fluidventils führt.

Alternativ kann die Eigenmediumbetätigung des erfindungsgemä-ßen Fluidventils dadurch realisiert werden, dass in der Öffnungsstellung (bzw. Wartestellung) nur ein schmaler Ringspalt zwischen dem Absperrkörper und dem umgebenden Ventilsitz besteht. Die Spaltbreite des Ringspalts ist hierbei so bemessen, dass in Abhängigkeit von der Viskosität des durchströmenden Fluids ein Druckunterschied zwischen der Eingangsseite und der Ausgangsseite des Fluidventils entsteht, wobei der Druckunterschied auf den Absperrkörper wirkt und eine Schließkraft erzeugt.

Falls beispielsweise Luft durch das Fluidventil strömt, so bietet das Fluidventil trotz des schmalen Ringspalts nur einen geringen Strömungswiderstand, so dass der Druckunterschied zwischen Eingangsseite und Ausgangsseite des Fluidventils gering ist, was zu einer entsprechend kleinen Schließkraft führt. In diesem Fall verbleibt das Fluidventil also in der Öffnungsstellung, so dass die eingangsseitig anstehende Luft bzw. Druckluft nahezu ungehindert durchströmen kann.

Falls dagegen frischer Lack durch das Fluidventil strömt, so bietet der schmale Ringspalt des Fluidventils aufgrund der größeren Viskosität des Lacks einen größeren Strömungswiderstand, was zu einem entsprechend größeren Druckunterschied zwischen Eingangsseite und Ausgangsseite des Fluidventils führt. Der größere Druckunterschied zwischen Eingangsseite und Ausgangsseite des Fluidventils erzeugt wiederum eine Schließkraft, wodurch das Fluidventil selbständig schließt und/oder die Schließkraftverstärkung aktiviert.

Darüber hinaus kann das erfindungsgemäße Fluidventil einen Stellungssensor aufweisen, der erkennt, in welcher Stellung sich das Fluidventil befindet (z.B. Öffnungsstellung, Schließstellung und/oder Wartestellung bzw. Andrückstellung), um eine Rückkopplung zu ermöglichen, wobei der Stellungssensor beispielsweise pneumatisch, elektrisch oder optoelektronisch arbeiten kann. Es ist auch möglich, dass der Sensor nur eine bestimmte Stellung, insbesondere nur die Schließstellung abfrägt bzw. erfasst.

Darüber hinaus besteht im Rahmen der Erfindung die Möglichkeit, dass der Absperrkörper des Fluidventils durch eine Stange bzw. ein mechanisches Ausgleichselement mit dem Kolben verbunden ist, wobei das Ausgleichselement ein Spiel zwischen dem Absperrkörper und dem Kolben zulässt. Das Spiel des Ausgleichselements ist hierbei vorzugsweise größer als die Bewegung des Absperrkörpers von der Öffnungsstellung in die Schließstellung, so dass sich der Absperrkörper ohne eine Bewegung des Kolbens eigenmediumbetätigt von der Öffnungsstellung bzw. von der Warteposition in die Schließstellung bewegen kann.

Bei dieser Variante mit einem Ausgleichselement zur Verbindung des Kolbens mit dem Absperrkörper ist vorzugsweise eine elastische Membran vorgesehen, welche den Absperrkörper im Bereich des Spiels in die Öffnungsstellung oder in die Wartestellung bewegt. Die Stellbewegung der Membran kann hierbei durch die Eigenelastizität der Membran und/oder durch ein Federelement (z.B. eine Spiralfeder) erfolgen. Darüber hinaus kann die Membran hierbei auch eine Dichtfunktion übernehmen.

Beispielsweise kann die Membran mittels einer Membranhalterung mit der Stange bzw. dem Ausgleichselement verbunden sein.

Die Arretierungsmechanik kann ein Arretierungselement umfassen, das vorzugsweise elastisch ausgebildet ist, um unter Krafteinwirkung seine Ursprungsform zu verändern, wodurch z.B. eine Entriegelung, die Schließstellung und/oder die Schließkraftverstärkung erzielt werden kann, und um bei Wegfall der Krafteinwirkung in seine Ursprungsform zurückzukehren, wodurch z.B. eine Verriegelung, die Wartestellung, die Öffnungsstellung und/oder eine Deaktivierung der Schließkraftverstärkung erzielt werden kann.

Das Arretierungselement hat vorzugsweise eine Basis, die an der Kolbenstange angebracht ist, und zumindest einen, vorzugsweise mehrere Arretierungshebel, die von der Basis vorragen. Das Arretierungselement kann ferner vorzugsweise zumindest einen Arretierungsabschnitt zur Ausbildung einer Arretierung aufweisen. Die Arretierung wird bevorzugt zwischen dem Arretierungsabschnitt und dem Anlage- bzw. Auflagerteil (vorzugsweise dem Anlage-, Auflager- bzw. Arretierabschnitt des Anlageteils benachbart bzw. am Umfangsrand der zentralen Öffnung) ausgebildet.

Ferner kann das Arretierungselement zumindest einen Schaltabschnitt (z.B. eine angeschrägte Schaltfläche) zur Wechselwirkung mit einem Schaltelement umfassen, um ein Entriegeln und/oder Verriegeln der Arretierung des Arretierungsabschnitts zu erzielen. Der Arretierungsabschnitt und/oder der Schaltabschnitt sind vorzugsweise im Bereich des freien Endes des zumindest einen Arretierungshebels angeordnet.

Die Arretierungsmechanik kann ferner ein Schaltelement (z.B. eine angeschrägte Schaltfläche) umfassen zum Entriegeln und/oder Verriegeln der Arretierung des Arretierungsabschnitts. Das Schaltelement ist vorzugsweise mit der Stange bzw. dem Ausgleichselement verbunden und/oder zusammen mit der Stange bzw. dem Ausgleichselement bewegbar. Bevorzugt ist das Schaltelement an der Membranhalterung vorgesehen, die an der Stange bzw. dem Ausgleichselement angeordnet ist, kann jedoch auch an der Stange bzw. dem Ausgleichselement vorgesehen werden.

Bei einem Ausführungsbeispiel ist das Schaltelement und/oder der Absperrkörper vorgesehen, sich z.B. aus der Wartestellung und/oder der Öffnungsstellung axial in Richtung Arretierungselement (bzw. Kolben) zu bewegen, insbesondere beaufschlagt mittels dem eingangsseitig anstehenden Fluid und/oder mittels dem Schließkraftverstärker, um die Schließstellung und/oder die Schließkraftverstärkung zu erzielen und/oder um die Arretierung des Arretierungsabschnitts zu entriegeln bzw. das Arretierungselement aus seiner Ursprungsform vorzugsweise radial einwärts zu verformen.

Ferner ist das Schaltelement und/oder der Absperrkörper vorzugsweise vorgesehen, sich z.B. aus der Wartestellung und/oder der Schließstellung axial in Richtung weg vom Arretierungselement (bzw. Kolben) zu bewegen, insbesondere fremdbetätigt beaufschlagt (z.B. mittels Luft bzw. Druckluft) über den zweiten Steuereingang, um die Wartestellung und/oder die Öffnungsstellung zu erzielen und/oder um die Arretierung des Arretierungsabschnitts zu verriegeln bzw. das Arretierungselement vorzugsweise radial auswärts in seine Ursprungsform zurückkehren zu lassen.

Bei einem Ausführungsbeispiel kann der Absperrkörper vorzugsweise am freien Ende der Stange bzw. des Ausgleichselements vorgesehen werden.

Das Fluidventil kann einen Ventilsitz umfassen, der zumindest einen konischen Abschnitt und vorzugsweise zumindest einen zylinderförmigen Abschnitt aufweist.

Erfindungsgemäß umfasst das Fluidventil einen Absperrkörper, der einen ersten und einen zweiten konischen Abschnitt und zumindest einen zylinderförmigen Abschnitt aufweist.

Ferner ist es möglich, den Absperrkörper mittels eines Dichtmittels (z.B. ein Dichtring, vorzugsweise ein O-Ring, und/oder eine Dichtkante) abzudichten bzw. mit einem Dichtmittel zu versehen. Bevorzugt weist der konische Abschnitt des Absperrkörpers eine umlaufende Dichtkante oder Dichtring auf, insbesondere vorgesehen, um in der Schließstellung dichtend an dem konischen Abschnitt des Ventilsitzes anzuliegen.

Der zylinderförmige Abschnitt des Absperrkörpers ist vorzugsweise vorgesehen, um insbesondere in der Wartestellung, jedoch gegebenenfalls auch in der Öffnungs- und/oder Schließstellung, mit dem zylinderförmigen Abschnitt des Ventilsitzes einen insbesondere sich axial erstreckenden Ringspalt auszubilden, der über seine axiale Erstreckung ein im Wesentlichen konstantes Spaltmaß bzw. Spaltbreite aufweist und/oder der koaxial und parallel zu der Kolbenstange, der Stange und/oder dem Ausgleichselement verläuft. Bevorzugt ist der Durchmesser des zylinderförmigen Abschnitts des Absperrkörpers größer als der Durchmesser der Stange bzw. des Ausgleichselements und/oder kleiner als der Durchmesser des zylinderförmigen Abschnitts des Ventilsitzes, um einen Ringspalt auszubilden.

Bei einem Ausführungsbeispiel ist der zylinderförmige Abschnitt des Absperrkörpers am freien Ende des Absperrkörpers angeordnet, wohingegen der konische Abschnitt des Absperrkörpers z.B. zwischen der Stange bzw. dem Ausgleichselement und dem zylinderförmigen Abschnitt angeordnet sein kann.

Der Absperrkörper umfasst einen ersten konischen Abschnitt, einen zweiten konischen Abschnitt und einen zylinderförmigen Abschnitt, wobei der zylinderförmige Abschnitt des Absperrkörpers zwischen dem ersten konischen Abschnitt und dem zweiten konischen Abschnitt des Absperrkörpers angeordnet ist, wohingegen der erste konische Abschnitt z.B. zwischen der Stange bzw. dem Ausgleichselement und dem zylinderförmigen Abschnitt und der zweite konische Abschnitt am freien Ende des Absperrkörpers angeordnet sein kann.

Das Arretierungselement, das Anlageteil und/oder die Membranhalterung können aus Metall, vorzugsweise rostbeständigem, insbesondere gehärtetem Stahl gefertigt sein.

Weiterhin ist zu erwähnen, dass die Erfindung nicht auf das vorstehend beschriebenen Fluidventil als einzelnes Bauteil beschränkt ist. Vielmehr umfasst die Erfindung auch eine komplette Lackieranlage mit einem erfindungsgemäßen Rückführventil, um bei einem Farbwechsel der Lackieranlage die beim Spülen entstehenden Farbreste über eine Rückführleitung in eine Rückführung zu führen, von wo sie kostengünstig entsorgt werden können.

Im Rahmen der Erfindung besteht auch die Möglichkeit, die erfindungsgemäße eigenmediumbetätigte Andrück-Stopp-Funktion in ein Hauptnadelventil eines Zerstäubers zu integrieren. Dann wäre ein Andrücken über die Hauptnadel möglich bei Zerstäubern ohne Rückführung.

Im Rahmen der Erfindung besteht auch die Möglichkeit, die erfindungsgemäße eigenmediumbetätigte Andrück-Stopp-Funktion in ein Hauptnadelventil eines Zerstäubers zu integrieren. Dann wäre ein Andrücken über die Hauptnadel möglich bei Zerstäubern ohne Rückführung.

Darüber hinaus umfasst die Erfindung auch ein Farbwechselverfahren mit zumindest einem der folgenden Schritte bzw. Betriebsphasen:
a) Lackieren mit Zuführung des Lacks über die Farbleitung.
b) Spülen der Farbleitung über das Rückführventil in die Rückführleitung.
c) Spülen der Lackierbauteile und des Hauptnadelkanals (Hauptnadel, Düse, Luftkappe oder Glockenteller).
d) Andrück-Stopp-Ventil wird in Wartestellung gebracht. Diese Betriebsphase kann zeitlich mit der Betriebsphase c) überlappen.
e) Befüllen (Andrücken) der Farbleitung bis zu dem Rückführventil (Andrück-Stopp-Ventil), wobei das Rückführventil automatisch schließt, wenn an seinem Eingang Farbe ansteht.
f) Eigenmediumbetätigtes Einflussnehmen auf das Durchflussverhalten (insbesondere eines Fluids durch das Ventil, z.B. in Abhängigkeit von dem eingangsseitig anstehenden Fluid).

Schließlich umfasst die Erfindung auch die neuartige Verwendung eines derartigen Rückführventils in einer Lackieranlage.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
- Figur 1: zeigt ein nicht erfindungsgemäßes Rückführventil, insbesondere eine schematische Darstellung eines Rückführventils, das am Ende eines Andrückvorgangs eigenmediumbetätigt in die Schließstellung schaltet,
- Figur 2: zeigt ein nicht erfindungsgemäßes Rückführventil, insbesondere eine Abwandlung des Rückführventils gemäß Figur 1, bei dem die Steuerluft zum fremdbetätigten Schließen des Rückführventils durch die Ventilnadel zugeführt wird,
- Figur 3: zeigt ein nicht erfindungsgemäßes Rückführventil, insbesondere eine Abwandlung des Rückführventils gemäß Figur 1 mit einem pneumatischen Schließkraftverstärker, wobei der Schließkraftverstärker ein Schieberventil aufweist,
- Figur 4: zeigt ein nicht erfindungsgemäßes Rückführventil, insbesondere eine Abwandlung des Rückführventils gemäß Figur 3 mit einer anderen Gestaltung des Schließkraftverstärkers,
- Figur 5: zeigt ein nicht erfindungsgemäßes Rückführventil, insbesondere eine Abwandlung des Rückführventils gemäß Figur 1 mit nur einem einzigen externen Steuerluftanschluss, der zum fremdbetätigten Öffnen des Rückführventils dient,
- Figur 6: zeigt ein nicht erfindungsgemäßes Rückführventil, insbesondere ein alternatives Ausführungsbeispiel eines Rückführventils mit einer Membran,
- Figur 7: zeigt ein nicht erfindungsgemäßes Rückführventil, insbesondere eine Abwandlung des Rückführventils gemäß Figur 6 mit einem zusätzlichen Kolben zum fremdbetätigten pneumatischen Öffnen des Rückführventils,
- Figur 8: zeigt ein nicht erfindungsgemäßes Rückführventil, insbesondere eine Weiterbildung des Rückführventils gemäß Figur 7, wobei auch ein fremdbetätigtes pneumatisches Schließen des Rückführventils möglich ist,
- Figur 9: zeigt ein nicht erfindungsgemäßes Rückführventil, insbesondere eine Abwandlung des Rückführventils gemäß Figur 8, wobei der Kolben über ein spielbehaftetes Ausgleichselement mit dem Absperrkörper verbunden ist,
- Figur 10: zeigt ein nicht erfindungsgemäßes Rückführventil, insbesondere eine Weiterbildung des Rückführventils gemäß Figur 9 mit einem Vorsteuerventil zum fremdbetätigten Schließen des Rückführventils,
- Figur 11: zeigt ein nicht erfindungsgemäßes Rückführventil, insbesondere eine Abwandlung des Rückführventils gemäß Figur 7, wobei der Absperrkörper eine Lochscheibe aufweist,
- Figuren 12A-12D: verschiedene Betriebszustände des Rückführventils,
- Figur 13: eine schematische Darstellung einer herkömmlichen Lackiereinlage mit einer Rückführleitung,
- Figur 14A: zeigt ein nicht erfindungsgemäßes Rückführventil, insbesondere eine vergrößerte Querschnittsansicht eines Rückführventils ähnlich dem Rückführventil gemäß Figur 9, wobei die Zeichnung das Rückführventil in einer Andrückstellung zeigt,
- Figur 14B: das Rückführventil gemäß Figur 14A in einer Schließstellung, in die das Rückführventil durch den eingangsseitig anliegenden Farbdruck und/oder druckluftbetätigt gestellt werden kann,
- Figur 14C: das Rückführventil gemäß den Figuren 14A und 14B in einer geöffneten Spülstellung zum Spülen der Farbleitung,
- Figur 15: zeigt ein nicht erfindungsgemäßes Rückführventil, insbesondere ein alternatives Ausführungsbeispiel eines Rückführventils mit Schließkraftverstärkung in einer Andrück/Wartestellung (ohne Farbbetätigung),
- Figur 16: eine perspektivische Ansicht eines Arretierungselements einer Arretierungsmechanik eines Rückführventils gemäß Figur 15,
- Figur 17A: das Rückführventil gemäß Figur 15 in einer Schließ-/Lackierstellung (mit Farbbetätigung und Schließkraftverstärkung),
- Figur 17B: das Rückführventil gemäß Figur 15 in einer Spülstellung (mit Druckluftunterstützung),
- Figuren 18A-18C: Detailansichten verschiedener Ausführungsformen von Ventilsitzen, Stangen bzw. Ausgleichselementen und Absperrkörpern ,
- Figur 19: Einbaupositionen des erfindungsgemäßen Fluidventils.

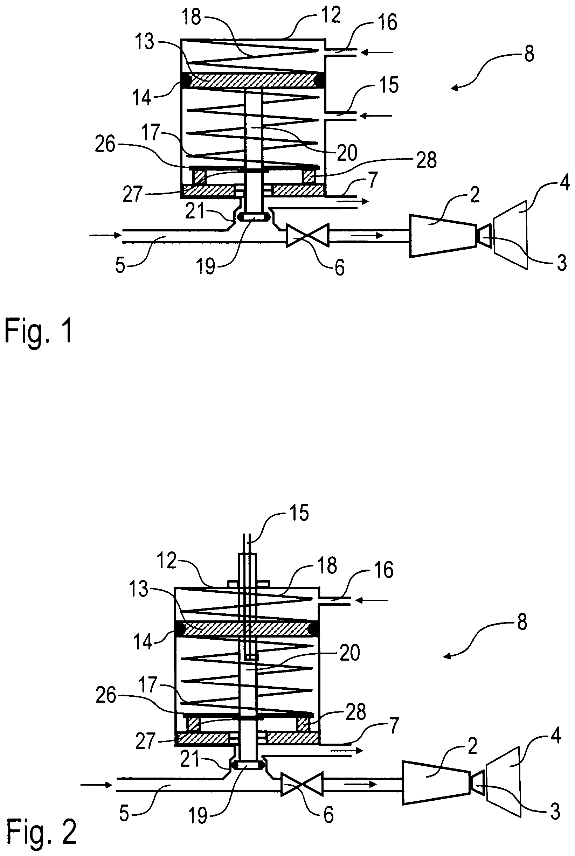

Die Figuren 1-12 und 14-17 zeigen Ausführungsbeispiele von nicht erfindungsgemäßen Rückführventilen, weil sie keinen Absperrkörper aufweisen und/oder zeigen, der einen ersten konischen Abschnitt und einen zweiten konischen Abschnitt umfasst, wobei ein zylinderförmiger Abschnitt des Absperrkörpers zwischen dem ersten konischen Abschnitt und dem zweiten konischen Abschnitt des Absperrkörpers angeordnet ist.

Das Ausführungsbeispiel gemäß Figur 1 stimmt teilweise mit dem eingangs beschriebenen herkömmlichen Ausführungsbeispiel gemäß Figur 13 überein, so dass zur Vermeidung von Wiederholungen auf die vorstehende Beschreibung verwiesen wird, wobei für entsprechende Einzelheiten dieselben Bezugszeichen verwendet werden.

Das Rückführventil 8 weist hierbei einen Zylinder 12 auf, in dem ein Kolben 13 verschiebbar ist, wobei der Kolben 13 gegenüber der Innenwand des Zylinders 12 durch eine Dichtung 14 abgedichtet ist, was eine Druckluftsteuerung des Kolbens 13 ermöglicht. Hierzu weist das Rückführventil 8 zwei Druckluftanschlüsse 15, 16 auf, wobei der Druckluftanschluss 15 unterhalb des Kolbens 13 in den Zylinder 12 mündet und ein pneumatisch fremdbetätigtes Schließen des Rückführventils 8 ermöglicht, wohingegen der Druckluftanschluss 16 oberhalb des Kolbens 13 in den Zylinder 12 mündet und ein pneumatisch fremdbetätigtes Öffnen des Rückführventils 8 ermöglicht.

Darüber hinaus weist das Rückführventil 8 zwei Spiralfedern 17, 18 auf, wobei die obere Spiralfeder 17 schwächer ist als die untere Spiralfeder 18.

Die obere Spiralfeder 18 stützt sich mit ihrer Oberseite an der inneren Stirnfläche des Zylinders 12 ab und drückt axial von oben gegen den Kolben 13.

Die untere Spiralfeder 17 stützt sich dagegen mit ihrer Unterseite an einer Anschlagplatte 26 ab und drückt von unten axial nach oben gegen den Kolben 13, wobei die Anschlagplatte 26 mittig eine Zentralbohrung zur Durchführung einer Kolbenstange 20 aufweist.

Die Kolbenstange 20 weist an ihrer Mantelfläche einen kragenförmigen Mitnehmer 27 auf, der von unten gegen die Anschlagplatte 26 stößt und die Anschlagplatte 26 nach oben mitnimmt, wenn sich die Kolbenstange 20 aus der dargestellten Wartestellung nach oben in die Schließstellung bewegt.

In der in der Zeichnung dargestellten Wartestellung ruht die Anschlagplatte 26 dagegen mit ihrer Unterseite auf einer ringförmigen Auflage 28.

Ferner weist das Rückführventil 8 einen Absperrkörper 19 auf, der über eine Ventilnadel 20 mit dem Kolben 13 verbunden ist, so dass die Bewegung des Kolbens 13 auf den Absperrkörper 19 übertragen wird. Der Absperrkörper 19 sitzt hierbei in einem Ventilsitz 21, wobei in der in der Zeichnung dargestellten Öffnungsstellung des Rückführventils 8 ein schmaler Ringspalt zwischen dem Absperrkörper 19 und dem Ventilsitz 21 liegt.

Der Ringspalt zwischen dem Absperrkörper 19 und dem Ventilsitz 21 ist hierbei so bemessen, dass eingangsseitig anströmende Luft oder Farbschaum im Wesentlichen ungehindert durchgelassen wird, wobei keine Druckdifferenz zwischen Einlassseite und Auslassseite des Absperrkörpers 19 entsteht.

Falls dagegen eingangsseitig höherviskose Farbe an dem Rückführventil 8 ansteht, so wird die Strömung des Lacks durch den Ringspalt zwischen dem Absperrkörper 19 und dem Ventilsitz 21 aufgrund des geringen Querschnitts des Ringspaltes behindert, wodurch ein Druckunterschied zwischen Einlassseite und Auslassseite des Absperrkörpers 19 entsteht. Dieser Druckunterschied zwischen Einlassseite und Auslassseite des Absperrkörpers 19 erzeugt wiederum eine Schließkraft auf den Absperrkörper 19, so dass sich der Absperrkörper 19 aus der in der Zeichnung gezeigten Warte- bzw. Öffnungsstellung nach oben in die Schließstellung bewegt und das Rückführventil 8 schließt.

Darüber hinaus kann das Rückführventil 8 auch fremdgesteuert in die Schließstellung bewegt werden, indem der Steuerluftanschluss 15 mit Druckluft beaufschlagt wird.

Ferner kann das Rückführventil 8 wieder geöffnet werden, indem an den oberen Steuerluftanschluss 16 Druckluft angelegt wird.

Das Ausführungsbeispiel gemäß Figur 2 stimmt weitgehend mit dem vorstehend beschriebenen und in Figur 1 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Steuerluftanschluss 15 zum Schließen des Rückführventils 8 koaxial durch die Ventilnadel 20 hindurchgeführt ist.

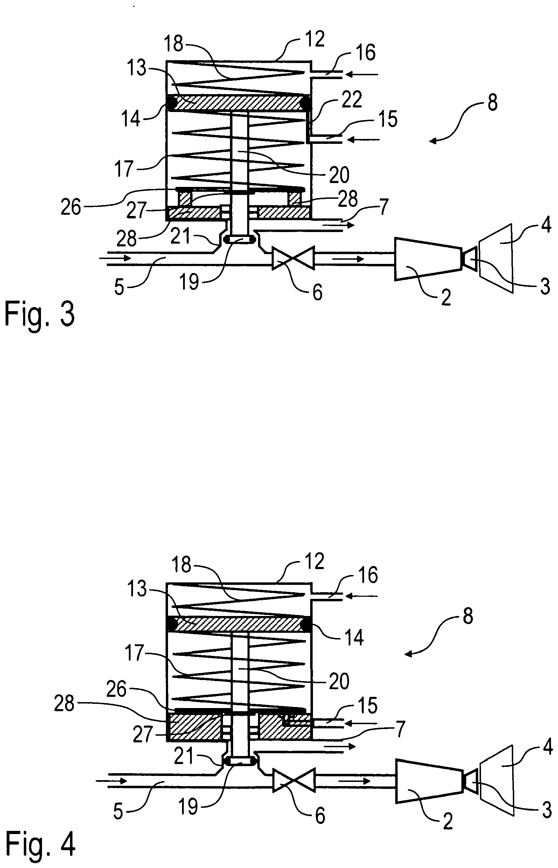

Das Ausführungsbeispiel gemäß Figur 3 stimmt wieder teilweise mit dem vorstehenden Ausführungsbeispiel gemäß Figur 1 überein, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass das Rückführventil 8 in diesem Ausführungsbeispiel einen Schließkraftverstärker aufweist, der die eigenmediumbetätigte Schließkraft verstärkt. Hierzu weist der Schließkraftverstärker ein Verstärkungsventil auf, welches den Druckluftanschluss 15 wahlweise öffnet oder verschließt. Das Verstärkungsventil besteht im Wesentlichen aus einem Ventilschieber 22, der an der Unterseite des Kolbens 13 außen angebracht ist und nach unten über die Mündungsöffnung des Druckluftanschlusses 15 ragt.

In der in der Zeichnung dargestellten Öffnungsstellung des Rückführventils 8 verschließt der Ventilschieber 22 die Mündungsöffnung des Druckluftanschlusses 15, so dass die an dem Druckluftanschluss 15 anliegende Druckluft nicht auf den Kolben 13 wirkt.

Wenn sich der Absperrkörper 19 dagegen aufgrund der Eigenmediumbetätigung aus der in der Zeichnung dargestellten Öffnungsstellung geringfügig nach oben in Richtung der Schließstellung bewegt hat, so gibt der Ventilschieber 22 die Mündungsöffnung des Druckluftanschlusses 15 frei, woraufhin die an dem Druckluftanschluss 15 anliegende Druckluft auf die Unterseite des Kolbens 13 wirkt und diesen zusätzlich nach oben in Richtung der Schließstellung drückt.

Das Ausführungsbeispiel gemäß Figur 4 stimmt teilweise mit dem vorstehend beschriebenen Ausführungsbeispiel gemäß Figur 3 überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht in der konstruktiven Gestaltung des Schließkraftverstärkers. So mündet der Druckluftanschluss 15 von unten axial in den Zylinder 12, wobei die Mündungsöffnung des Druckluftanschlusses 15 in der in Figur 4 gezeigten Öffnungsstellung mittelbar durch den Kolben 13 verschlossen ist, so dass nur eine relativ geringe Kraft auf den Kolben 13 wirkt, da die Mündungsöffnung des Druckluftanschlusses 15 nur einen relativ geringen Querschnitt aufweist.

Wenn der Kolben 13 dagegen die Mündungsöffnung des Druckluftanschlusses 15 bei der beginnenden Schließbewegung des Rückführventils 18 freigibt, so wird plötzlich die gesamte Unterseite des Kolbens 13 mit dem über den Druckluftanschluss 15 bereitgestellten Druck beaufschlagt, wodurch eine wesentlich größere Schließkraft entsteht. Das Kraftübersetzungsverhältnis wird hierbei durch das Verhältnis der Querschnitte der Mündungsöffnung des Druckluftanschlusses 15 einerseits und des Kolbens 13 andererseits bestimmt.

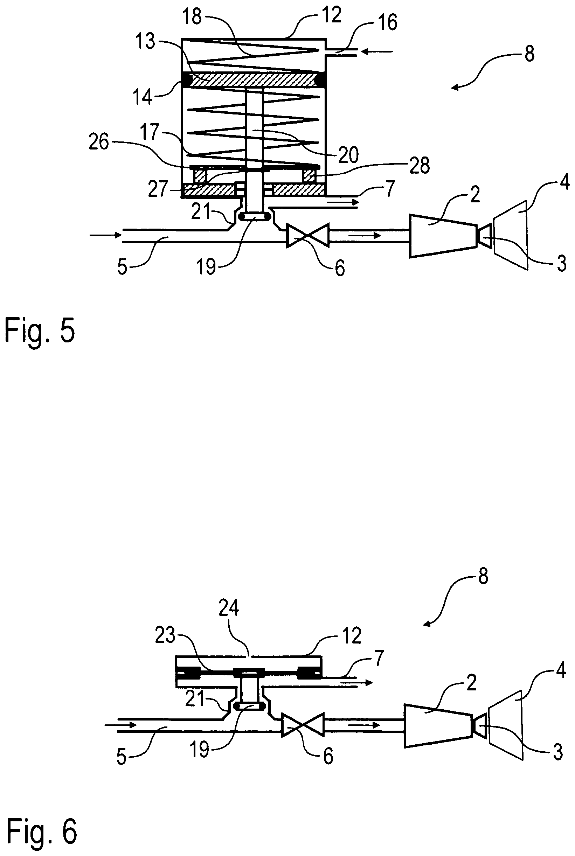

Das Ausführungsbeispiel gemäß Figur 5 stimmt weitgehend mit dem vorstehend beschriebenen und in Figur 1 dargestellten Ausführungsbeispiel überein, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass der in Figur 1 vorgesehene Druckluftanschluss 15 weggelassen ist. Das Ausführungsbeispiel gemäß Figur 5 ermöglicht also keine fremdbetätigte Schließung des Rückführventils 8, so dass die Schließbewegung ausschließlich eigenmediumbetätigt gesteuert wird.

Figur 6 zeigt ein grundsätzlich anderes Ausführungsbeispiel eines Rückführventils, das jedoch ebenfalls teilweise mit den vorstehend beschriebenen Ausführungsbeispielen übereinstimmt, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass in dem Zylinder 12 eine elastische Membran 23 angeordnet ist, wobei der Absperrkörper 19 mit der Mitte der Membran 23 verbunden ist, so dass die Membran 23 in Abhängigkeit von ihrer Auslenkung eine entsprechende Rückstellkraft erzeugt.

Darüber hinaus weist der Zylinder 12 an seiner Oberseite eine Ausgleichsbohrung 24 auf, um bei einer Bewegung der Membran 23 einen Druckausgleich zu ermöglichen.

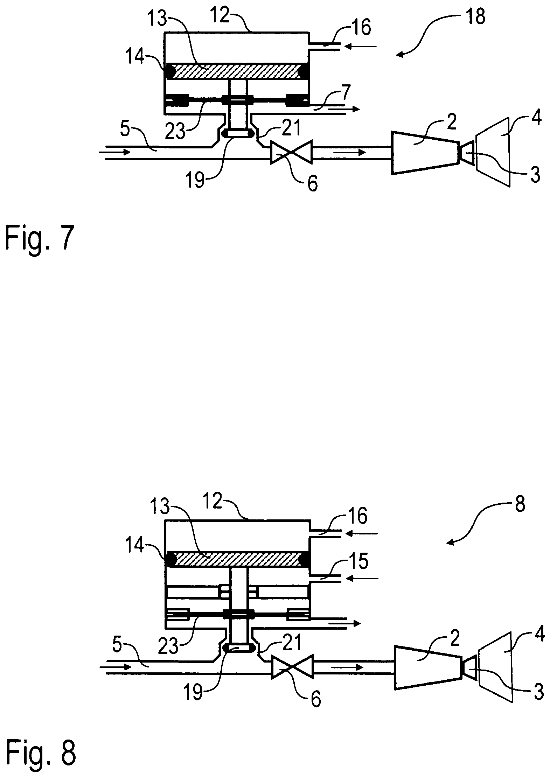

Das Ausführungsbeispiel gemäß Figur 7 ist eine Kombination des Ausführungsbeispiels gemäß Figur 6 mit den vorangegangenen Ausführungsbeispielen, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass in dem Zylinder 12 zusätzlich zu der Membran 23 auch der Kolben 13 angeordnet ist, wobei die Ventilnadel 20 den Absperrkörper 19 mit der Membran 23 und dem Kolben 13 verbindet. Der Absperrkörper 19 kann hierbei also durch die eingangs ausführlich beschriebene Druckbeaufschlagung in die Öffnungsstellung bewegt werden, indem der Druckluftanschluss 16 mit einem entsprechenden Druck beaufschlagt wird.

Das Ausführungsbeispiel gemäß Figur 8 entspricht weitgehend dem Ausführungsbeispiel gemäß Figur 7, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass zusätzlich zu dem Druckluftanschluss 16 zum Öffnen des Rückführventils 8 auch der Druckluftanschluss 15 zum Schlie-ßen des Rückführventils 8 vorgesehen ist.

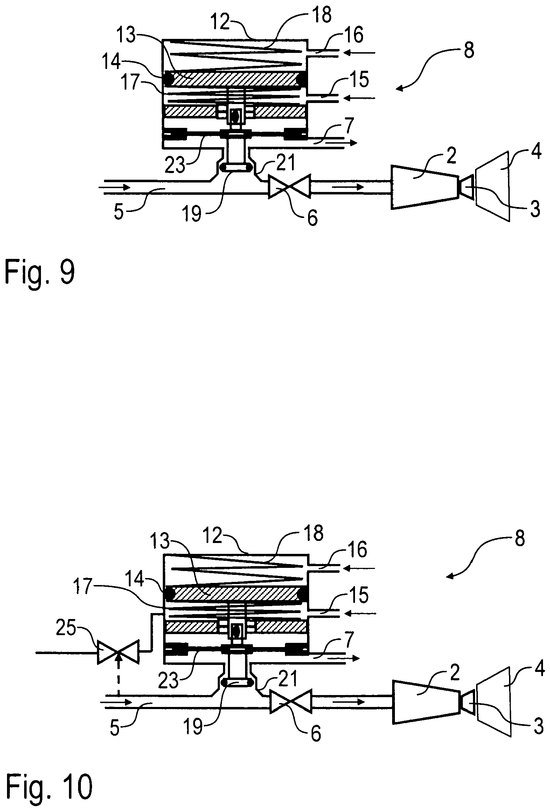

Das Ausführungsbeispiel gemäß Figur 9 stimmt weitgehend mit dem vorstehend beschriebenen und in Figur 8 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Kolben 13 nicht starr mit der Membran 23 und dem Absperrkörper 19 verbunden ist, sondern über ein mechanisches Ausgleichselement, das ein mechanisches Spiel erlaubt. Dies bedeutet, dass bei der Schließbewegung des Absperrkörpers 19 lediglich die Membran 23 bewegt wird, wohingegen das Spiel des Ausgleichselements zwischen dem Kolben 13 und der Membran 23 verhindert, dass auch der Kolben 13 bewegt wird. Das Spiel des Ausgleichselements ist also etwas größer als die Bewegung des Absperrkörpers 19 zwischen der Öffnungsstellung und der Schließstellung.

Das Ausführungsbeispiel gemäß Figur 10 stimmt weitgehend mit dem vorstehend beschriebenen und in Figur 9 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Unterseite des Kolbens 13 über ein Vorsteuerventil 25 mit Druckluft beaufschlagt werden kann, um die Schließbewegung des Rückführventils 8 zu unterstützen. Die Ansteuerung des Vorsteuerventils 25 erfolgt hierbei in Abhängigkeit von dem Druck in der Farbleitung 5. Das Vorsteuerventil 25 weist deshalb einen Steuereingang auf, der mit der Farbleitung 5 verbunden ist.

Wenn der Druck in der Farbleitung 5 am Ende des Andrückvorgangs steigt, weil sich frischer Lack in der Farbleitung 5 befindet, so sorgt der steigende Druck in der Farbleitung 5 dafür, dass das Vorsteuerventil 25 aufgesteuert wird, wodurch die Unterseite des Kolbens 13 mit Druck beaufschlagt wird. Dadurch wird die eigenmediumbetätigte Schließkraft verstärkt, was zu einem schnellen Schließen des Rückführventils führt.

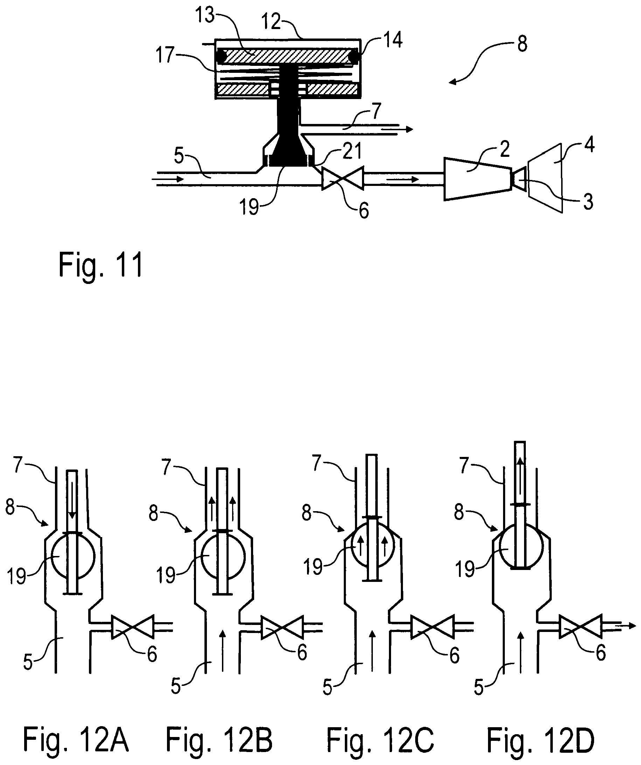

Figur 11 zeigt ein weiteres Ausführungsbeispiel des Rückführventils 8, das weitgehend mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit besteht hierbei darin, dass der Absperrkörper 19 eine Lochscheibe aufweist, wobei das Fluid durch die Löcher in der Lochscheibe hindurchtreten muss.

Die Figuren 12A-12D zeigen verschiedene Betriebsstadien des Rückführventils bei einem Farbwechsel.

So zeigt Figur 12A zunächst die Stellung des Rückführventils 8 beim Spülen der Farbleitung 5. Hierzu wird der Absperrkörper 19 pneumatisch fremdbetätigt aus dem Ventilsitz herausgedrückt, um das Rückführventil 8 zu öffnen. Die beim Spülen entstehenden Reste aus Spülmittel, Farbschaum, Druckluft und Restfarbe können dann über die Rückführleitung 7 in die Rückführung geleitet werden.

Figur 12B zeigt dagegen den Zustand des Rückführventils 8 beim Andrücken der neuen Farbe. Das Rückführventil 8 wird dann pneumatisch nicht angesteuert, so dass der kugelförmige Absperrkörper 19 locker in dem Ventilsitz ruht und lediglich Luft oder Farbschaum durchlässt.

Figur 12C zeigt dagegen den Zustand des Rückführventils 8 am Ende des Andrückvorgangs, wenn die Farbleitung 5 bereits mit frischem Lack gefüllt ist, der eine relativ große Viskosität aufweist. Die relativ große Viskosität des einströmenden frischen Lacks hat zur Folge, dass das Rückführventil 8 eigenmediumbetätigt schließt, indem der kugelförmige Absperrkörper 19 in seinen Ventilsitz gedrückt wird.

Figur 12D zeigt schließlich den Zustand des Rückführventils beim anschließenden Lackieren, nachdem der vorangegangene Andrückvorgang beendet worden ist. In diesem Zustand wird der kugelförmige Absperrkörper 19 pneumatisch fremdbetätigt in den Ventilsitz gezogen, um das Rückführventil sicher zu schließen.

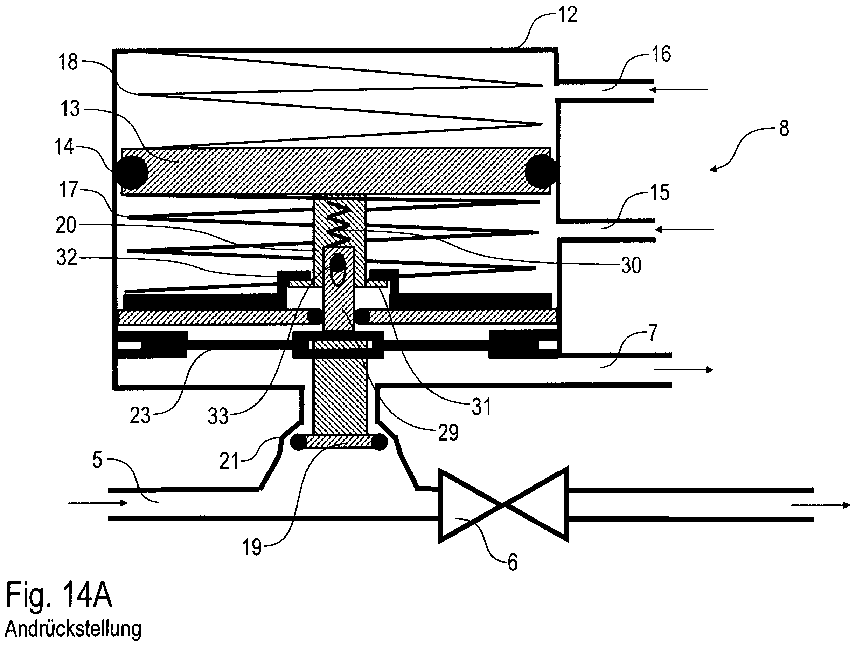

Das Rückführventil 8 gemäß den Figuren 14A - 14C entspricht weitgehend dem in Figur 9 dargestellten Rückführventil, so dass zur Vermeidung von Wiederholungen auf die vorstehende Beschreibung Bezug genommen wird, wobei für entsprechende Einzelheiten dieselben Bezugszeichen verwendet werden.

In der vergrößerten Darstellung gemäß den Figuren 14A - 14C ist weiterhin ersichtlich, dass die Kolbenstange 20 hohl ausgeführt ist und eine Zentralbohrung aufweist. In dieser Zentralbohrung in der Kolbenstange 20 ist eine Stange 29 axial verschiebbar, wobei die Stange 29 fest mit dem Absperrkörper 19 verbunden ist und in einer mittigen Öffnung in der Membran 23 eingespannt ist.

Darüber hinaus ist in der Zentralbohrung der Kolbenstange 20 eine Spiralfeder 30 angeordnet, die sich an ihrer Oberseite an dem Kolben 13 und an ihrer Unterseite an der oberen Stirnfläche der Stange 29 abstützt. Die Spiralfeder 30 und die Membrane drückt also den Kolben 13 und die Stange 29 und damit auch den Absperrkörper 19 axial auseinander. Es kann jedoch auch nur die Membrane ohne die Spiralfeder 30 die Rückstellungsfunktion übernehmen.

Darüber hinaus ist zu erwähnen, dass an dem unteren Ende der Kolbenstange 20 ein ringförmig umlaufender, kragenförmiger Anschlag 31 angeformt ist, um die Bewegung des Kolbens 13 nach oben zu einzugrenzen (es wird nicht die Bewegung des Kolbens 13 begrenzt, sondern die des "Paketes" zwischen dem Kolben 13 und einer Anschlagplatte 32). Hierzu weist das Rückführventil 8 die Anschlagplatte 32 auf, wobei die Anschlagplatte 32 eine mittige Öffnung aufweist, durch die die Kolbenstange 20 hindurchgeführt ist.

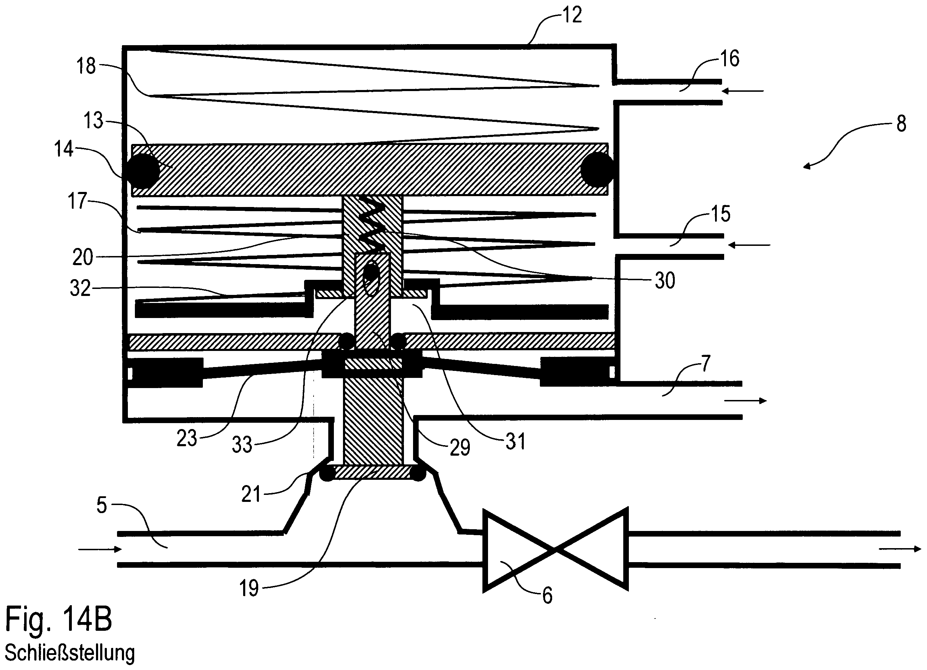

In der Andrückstellung gemäß Figur 14A und in der Schließstellung gemäß Figur 14B liegt der Anschlag 31 mit seiner Oberseite an dem Umfangsrand der mittigen Öffnung in der Anschlagplatte 32 an, so dass sich der Kolben 13 nicht weiter nach oben bewegen kann.

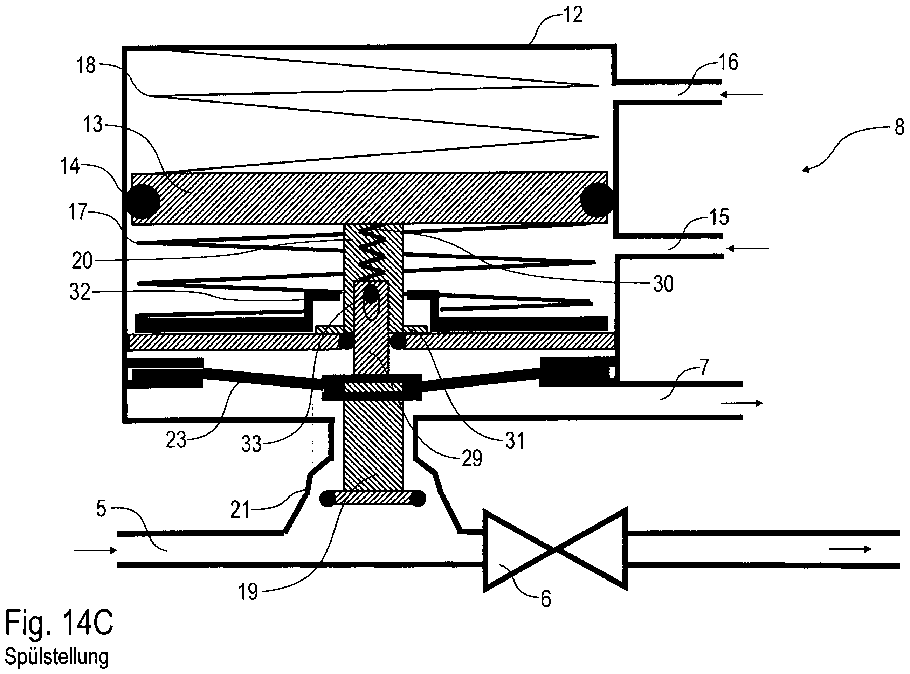

In der Spülstellung gemäß Figur 14C ist der Kolben 13 mit der Kolbenstange 20 dagegen nach unten bewegt, so dass der Anschlag 31 nicht an der Anschlagplatte 32 anliegt. Der Anschlag 31 liegt am Ventilboden an, um die Ventilbewegung nach unten zu begrenzen. In dieser Stellung sollte die Anschlagplatte 32 am Ventilboden anliegend.

Weiterhin ist aus den vergrößerten Zeichnungen gemäß den Figuren 14A - 14C ersichtlich, dass sich in der Stange 29 ein Langloch befindet, in das ein Mitnehmerstift 33 eingreift, der mit der Kolbenstange 20 verbunden ist. Die Geometrie des Mitnehmerstifts 33 und des Langlochs sind hierbei so aufeinander abgestimmt, dass das Langloch in der Stange 29 ein mechanisches Spiel für den Mitnehmerstift 33 bietet, so dass die Kolbenstange 20 und der Kolben 13 einerseits und die Stange 29 und der Absperrkörper 19 andererseits ein axiales Spiel aufweisen.

Im Folgenden wird nun die in Figur 14A gezeigte Andrückstellung des Rückführventils 8 beschrieben. Die Andrückstellung des Rückführventils 8 wird bei einem Farbwechsel eingestellt, wenn die Farbleitung 5 gespült worden ist und die Farbleitung 5 bis zu dem Hauptnadelventil 6 mit einer neuen Farbe angedrückt werden soll.

In dieser Andrückstellung liegt weder an dem Druckluftanschluss 15 noch an dem Druckluftanschluss 16 Steuerluft an, um den Kolben 13 zu betätigen. Die Stellung des Rückführventils 8 wird dann nur aus dem Zusammenspiel der elastischen Membran 23 und der Spiralfedern 17, 18 und 30 bestimmt. So stellt die Membran 23 die Stange 29 und damit auch den Absperrkörper 19 in die in der Zeichnung dargestellte Neutralstellung, in der sich zwischen dem Absperrkörper 19 und dem Ventilsitz 21 ein Ringspalt befindet, der es ermöglicht, dass über die Farbleitung 5 zunächst zugeführte Luft über die Rückführleitung entweichen kann.

Die Spiralfeder 17 drückt den Kolben 13 und damit auch die Kolbenstange 20 dagegen nach oben, bis der Anschlag 31 an der Anschlagplatte 32 anliegt.

Schließlich drückt die Spiralfeder 30 die Stange 29 axial gegenüber dem Kolben 13 nach unten.

Im Folgenden wird nun die in Figur 14B gezeigte Schließstellung des Rückführventils 8 beschrieben, wobei das Rückführventil 8 wahlweise durch den eingangsseitig anliegenden Farb-druck oder druckluftbetätigt in die Schließstellung gebracht werden kann.

Im Folgenden wird zunächst beschrieben, wie das Rückführventil 8 beim Andrücken aufgrund des eingangsseitig anliegenden Farbdrucks aus der in Figur 14A dargestellten Andrückstellung in die Schließstellung gemäß Figur 14B gebracht wird.

Falls beim Andrücken der neuen Farbe über die Farbleitung 5 nicht mehr nur Luft oder Farbschaum zugeführt wird, sondern frische Farbe, so führt die höhere Viskosität der frischen Farbe zu einem höheren Druck auf den Absperrkörper 19, der dadurch entgegen der elastischen Rückstellkraft der Membran 23 nach oben gedrückt wird. Hierbei ermöglicht das mechanische Spiel zwischen der Kolbenstange 20 und der Stange 29, dass der Kolben 13 in derselben Position verbleibt wie in der in Figur 14A dargestellten Andrückstellung.

Schließlich zeigt Figur 14C eine Spülstellung des Rückführventils 8, in der das Rückführventil 8 unabhängig von dem eingangsseitig anliegenden Fluiddruck geöffnet ist, um die Farbleitung 5 über die Rückführleitung 7 spülen zu können.

Hierzu wird der Kolben 13 über den Druckluftanschluss 16 mit Druckluft beaufschlagt, wodurch der Kolben 13 axial nach unten gedrückt wird. Die Bewegung des Kolbens 13 überschreitet hierbei das mechanische Spiel zwischen dem Langloch in der Stange 29 und dem Mitnehmerstift 33 in der Kolbenstange 20. Dies hat zur Folge, dass der Kolben 13 mit der Kolbenstange 20 die Stange 29 und damit auch den Absperrkörper 19 nach unten drückt. Der Absperrkörper 19 wird dadurch aus dem Ventilsitz 21 herausgedrückt, wodurch sich das Rückführventil 8 öffnet.

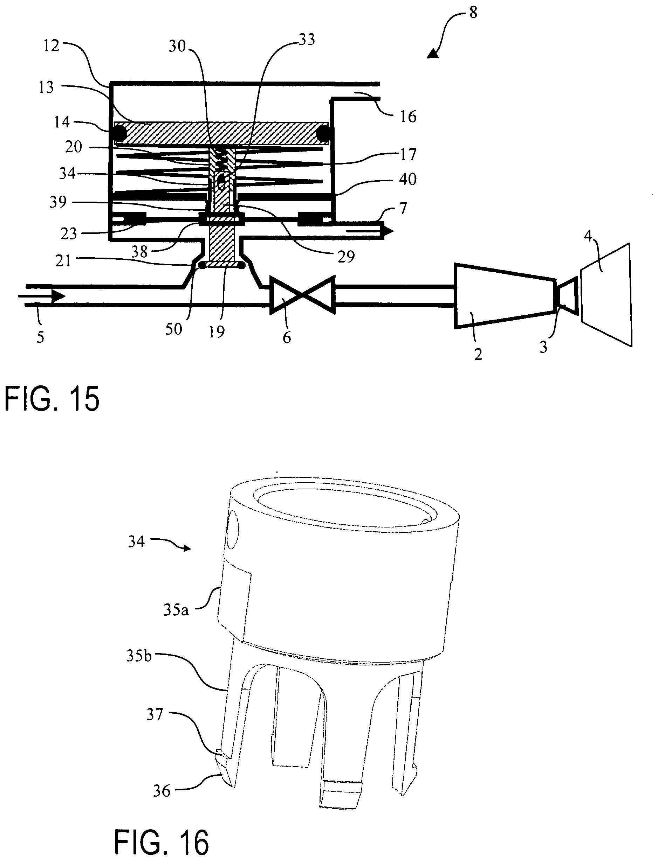

Figur 15 zeigt ein wiederum anderes Ausführungsbeispiel eines Rückführventils, das jedoch ebenfalls teilweise mit den vorstehend beschriebenen Ausführungsbeispielen übereinstimmt, so dass zur Vermeidung von Wiederholungen auf die vorstehenden Beschreibungen Bezug genommen wird, wobei für entsprechende Einzelheiten dieselben Bezugszeichen verwendet werden.

Eine Besonderheit dieses Ausführungsbeispiels besteht unter anderem in einer Schließkraftverstärkung mittels Arretierungsmechanik. Insbesondere ist ein Schließkraftverstärker in Abhängigkeit von dem eingangsseitig anstehenden Fluid eigenmediumbetätigt aktivierbar, um die Schließkraftverstärkung zu erzielen, vorzugsweise, indem die Arretierungsmechanik in Abhängigkeit von dem eingangsseitig anstehenden Fluid eigenmediumbetätigt entriegelt wird, um die Schließkraftverstärkung zu erzielen und/oder um das Fluidventil in die Schließstellung gelangen zu lassen.

Figur 15 zeigt hierzu insbesondere, dass an der Kolbenstange 20 ein Arretierungselement 34 angeordnet ist. Das Arretierungselement 34 umfasst eine zylinderförmige Basis 35a, die koaxial an der Kolbenstange 20 befestigt ist, und vorzugsweise vier Arretierungshebel 35b, die von der Basis 35a vorragen (Figur 16). Jeder der Arretierungshebel 35b weist einen Schaltabschnitt, vorzugsweise eine angeschrägte Schaltfläche 36, und einen Verriegelungsabschnitt, vorzugsweise eine Verriegelungsfläche 37, auf. Die Arretierungsabschnitte 37 sind vorgesehen zur Ausbildung einer verriegelbaren und entriegelbaren Arretierung mit einem Anlage-, Anschlag- bzw. Auflagerteil 40.

Die Schaltabschnitte 36 sind vorgesehen zum Zusammenwirken mit einem Schaltelement 39, wodurch ein Entriegeln und/oder Verriegeln der Arretierung zwischen den Arretierungsabschnitten 37 und dem Anlageteil 40 erzielt werden kann. Das Schaltelement 39 ist also vorgesehen, um mit den Schaltabschnitten 36 zum Entriegeln und/oder Verriegeln der Arretierung zwischen den Arretierungsabschnitten 37 und dem Anlageteil 40 zusammenzuwirken, insbesondere in Eingriff und außer Eingriff zu gelangen. Das Schaltelement 39 ist mit dem Ausgleichselement bzw. der Stange 29 verbunden. Insbesondere ist das Schaltelement 39 an einer Membranhalterung 38 vorgesehen, die an dem Ausgleichselement bzw. der Stange 29 angeordnet ist. Das Schaltelement 39 umfasst eine vorzugsweise umlaufende angeschrägte Schaltfläche, die koaxial zu dem Ausgleichselement bzw. der Stange 29 angeordnet und zum Zusammenwirken mit den entsprechend angeschrägten Schaltflächen der Schaltabschnitte 36 vorgesehen ist. Das Schaltelement 39 ist vorgesehen, um sich zusammen mit der Stange 29 bzw. dem Ausgleichselement und/oder dem Absperrkörper 19 zu bewegen.

Insbesondere ist das Arretierungselement 34 vorzugsweise mittels der vorragenden Arretierungshebel 35b elastisch ausgebildet, um mit dem Anlageteil 40 eine schaltbare (verriegelbare/entriegelbare) Schnapp-, Rast- und/oder Klemmverbindung auszubilden.

Wie ferner in Figur 15 zu sehen ist, hat das Anlageteil 40 mittig eine zentrale Öffnung zur Durchführung des Arretierungselements 34 (insbesondere der Arretierungshebel 35b und/oder der Arretierungsabschnitte 37), der Kolbenstange 20 und/oder der Stange 29 bzw. des Ausgleichselements. Das Anlageteil 40 ist ferner an einer Innenseite einer Wandung des Zylinders 12 bzw. einer Gehäusewandung des Fluidventils 8 befestigt. Das Anlageteil 40 ist vorzugsweise vorgesehen, damit sich die Spiralfeder 17 mit ihrer Unterseite (insbesondere kolbenseitig, d.h. in Figur 15 axial oben) an dem Anlageteil 40 abstützen und von unten axial nach oben gegen den Kolben 13 drücken kann und/oder um am Umfangsrand bzw. benachbart zu der zentralen Öffnung (absperrkörperseitig, d.h. in Figur 15 axial unten) einen Anlage-, Auflager- bzw. Arretierabschnitt für die Arretierungsabschnitte 37 bereitzustellen. Das Anlageteil 40 kann vorzugsweise strukturell und/oder funktionell ähnlich oder sogar im Wesentlichen identisch zur Anschlagplatte 32 ausgebildet werden. Positioniert ist das Anlageteil 40 bevorzugt zwischen der Membran 23 und der Spiralfeder 17 und/oder dem Kolben 13.

Im Allgemeinen funktioniert der Schließkraftverstärker und/oder die Arretierungsmechanik gemäß Figur 15 wie folgt: Beim Andrücken der Farbe steht das Ventil 8 pneumatisch drucklos in Andrück- bzw. Warteposition. Der Absperrkörper 19 bildet dabei einen schmalen Ringspalt 50 zum Ventilsitz 21. Die eintreffende Farbe verdrängt die Luft und das verbliebene Luft/Spülmittel-Aerosol aus den Farbkanälen (vom Farbwechsler bis zum Zerstäuber) durch den Andrückspalt 50 des (Farbstopp-) Ventils in die Rückführleitung 7. Beim Eintreffen der Farbe wird der Absperrkörper 19 veranlasst, durch die zähere Farbe (ohne Steuerungs-Sensorik und vorzugsweise sofort) zu schließen. Für den sicheren Betrieb beim Lackieren wird beim Eintreffen der Farbe am Absperrkörper 19 hierzu die Arretierungsmechanik entriegelt, wodurch die federbetätigte Schließkraftverstärkung erzielt wird, vorzugsweise erzeugt durch die Spiralfeder 17, die zwischen dem Anlageteil 40 und dem Kolben 13 angeordnet ist.

Beim anschließenden Andrücken wird das Ausgleichselement bzw. die Stange 29 durch die eintreffende Farbe in Figur 15 nach oben verschoben. Dabei schiebt das vorzugsweise an der Membranhalterung 38 angeordnete Schaltelement 39 die Arretierungshebel 35b über die Schaltabschnitt 36 radial nach innen. Beim Ausklinken bzw. Entriegeln der Arretierungshebel 35b bzw. der Arretierungsabschnitte 37 von dem Anlageteil 40 wird die Spiralfeder 17 entspannt und dadurch der Absperrkörper 19 dicht an den Ventilsitz 21 gepreßt.

Figur 16 zeigt das Arretierungselement 35 in vergrößertem Maßstab. Das Arretierungselement 35 umfasst die zylinderförmige Basis 35a und die davon vorragenden vier Arretierungshebel 35b. Jeder der Arretierungshebel 35b weist den Schaltabschnitt 36 und den Arretierungsabschnitt 37 auf.

Figur 15 zeigt eine Querschnittsansicht des Rückführventils in einer Andrück-/Wartestellung (ohne Farbbetätigung).

Der Kolben 13 wird durch die Spiralfeder 17 nach oben gedrückt. Die Bewegung wird jedoch durch die Arretierungshebel 35b begrenzt, die mittels den Arretierungsabschnitten 37 mit dem Anlageteil 40 in Eingriff (verriegelt) sind. Die Arretierungsabschnitte 37 bilden somit mit dem Anlageteil 40 eine Arretierung aus, insbesondere mit dem Umfangsrand der zentralen Öffnung in dem Anlageteil 40.

Der Mitnehmerstift 33 ist am oberen Ende des Langlochs positioniert mittels der Membran bzw. zusätzlich durch die Spiralfeder 17. Der Absperrkörper 19 ist so positioniert, dass zwischen Ventilsitz 21 und Absperrkörper 19 ein Andrück- bzw. Ringspalt 50 ausgebildet wird.

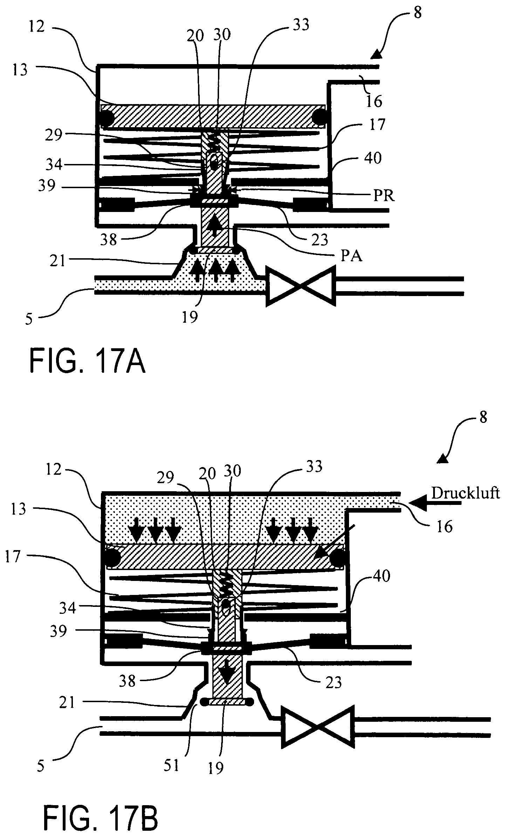

Figur 17A zeigt eine Querschnittsansicht des Rückführventils aus Figur 15 in einer Schließstellung (mit Farbbetätigung) bzw. einer Lackierstellung mit Schließkraftverstärkung. Das Schaltelement 39 an der Membranhalterung 38 wird zunächst mittels der über die Farbleitung 5 zugeführten Farbe nach oben bewegt. Dadurch gelangt das Schaltelement 39 mit den Schaltabschnitten 36 der Arretierungshebel 35b so in Eingriff, dass die Arretierungshebel 35b nach radial innen PR gedrückt werden, wodurch die Arretierung zwischen den Arretierungshebeln 35b, insbesondere den Arretierungsabschnitten 37, und dem Anlageteil 40 entriegelt bzw. gelöst wird. Somit kann der Kolben 13 durch die Spiralfeder 17 nach oben gedrückt werden. Der Absperrkörper 19 wird also zunächst mittels der über die Farbleitung 5 zugeführten Farbe nach oben beaufschlagt und dann verstärkt nach oben beaufschlagt durch den Schließkraftverstärker, der mittels der Spiralfeder 17 die verstärkte Schließkraft erzeugt, um vorteilhaft eine dichte und sichere Abdichtung zu gewährleisten. Der Mitnehmerstift 33 ist am unteren Ende des Langlochs positioniert mittels des Farbdrucks.

Insbesondere kann bei einem Vergleich der Figuren 15 und 17A gesehen werden, dass das Schaltelement 39 vorgesehen ist, sich aus der Warte-/Andrückstellung (Figur 15) axial PA in Richtung Arretierungselement 34 zu bewegen, um die Schließstellung (Figur 17A) und/oder die Schließkraftverstärkung zu erzielen und/oder um die Arretierung der Arretierungsabschnitte 37 mit dem Anlageteil 40 zu entriegeln, insbesondere, indem das Arretierungselement 34 aus seiner Ursprungsform (Figur 16) radial einwärts verformt wird.

Figur 17B zeigt eine Querschnittsansicht des Rückführventils aus Figur 15 in einer Spülstellung mit Druckluftunterstützung. Der Mitnehmerstift 33 ist am oberen Ende des Langlochs positioniert. Der Kolben 13 wird durch die über den Druckluftanschluss 16 zugeführte Druckluft nach unten gedrückt. Ferner wird die Spiralfeder 17 zusammengedrückt. Darüber hinaus wird der Absperrkörper 19 nach unten bewegt, wodurch ein Spülspalt 51 zwischen Absperrkörper 19 und Ventilsitz 21 ausgebildet wird. In der Spülstellung bilden die Arretierungsabschnitte 37 keine Arretierung mit dem Anlageteil 40 aus, sind also von dem Anlageteil 40 außer Eingriff. Insbesondere sind die Arretierungsabschnitte 37 von dem Anlageteil 40 beabstandet bzw. über die Einrastposition hinaus geschoben.

Insbesondere kann bei einem Vergleich der Figuren 15, 17A und 17B gesehen werden, dass das Schaltelement 39 vorgesehen ist, sich aus der Schließstellung (Figur 17A) und/oder der Warte-/Andrückstellung (Figur 15) axial in Richtung weg vom Arretierungselement 34 zu bewegen, um die Warte-/Andrückstellung (Figur 15) und/oder die Öffnungsstellung (Figur 17B) zu erzielen und/oder um die Arretierung der Arretierungsabschnitte 37 mit dem Anlageteil 40 auszubilden bzw. zu verriegeln, insbesondere, indem das Arretierungselement 34 in seine Ursprungsform (siehe Figur 16) zurückkehren kann.

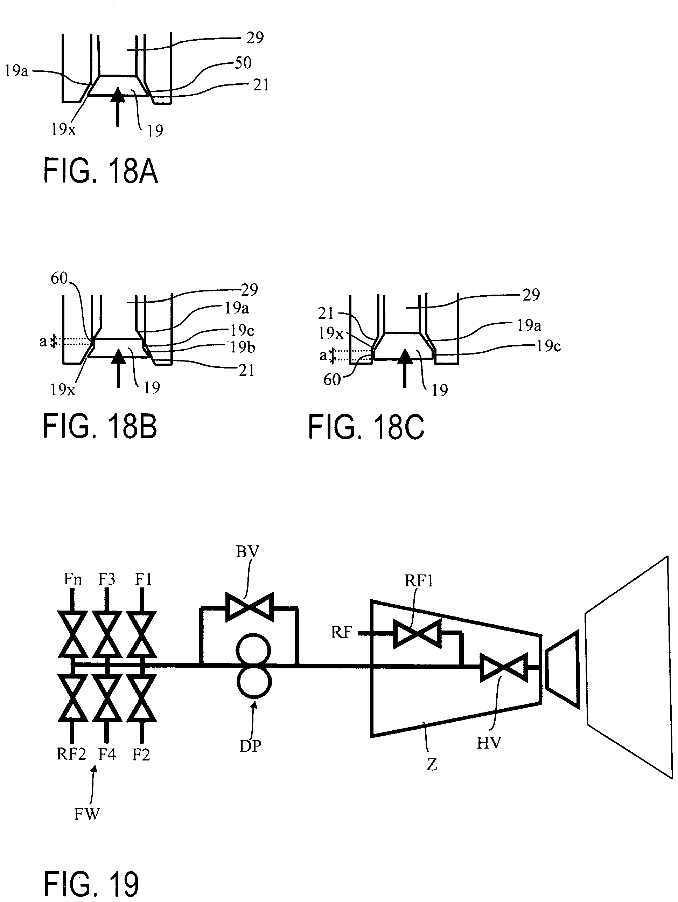

Figuren 18A-18C zeigen Detailansichten verschiedener Ausführungsformen von Ventilsitzen, Stangen bzw. Ausgleichselementen und Absperrkörpern, die teilweise mit den vorstehend beschriebenen Ausführungsbeispielen übereinstimmen und bei den vorstehend beschriebenen Ventilen vorgesehen werden können, so dass zur Vermeidung von Wiederholungen auf die vorstehenden Beschreibungen Bezug genommen wird, wobei für entsprechende Einzelheiten dieselben Bezugszeichen verwendet werden.

Figur 18A zeigt ein nicht erfindungsgemäßes Ausführungsbeispiel, insbesondere schematisch eine vergrößerte Ansicht einer Ausführungsform nach dem Axialspalt-Prinzip, insbesondere eine modifizierte Stange 29 (bzw. Ausgleichselement) und/oder einen modifizierten Absperrkörper 19 im Bereich des Ventilsitzes 21. Der Absperrkörper 19 ist konisch ausgebildet, vorzugsweise sich zur Farbleitung 5 hin aufweitend. Ferner umfasst der Ventilsitz 21 einen konischen Abschnitt, vorzugsweise sich zur Farbleitung 5 hin aufweitend. Der Absperrkörper 19 ist zumindest abschnittsweise in dem konischen Abschnitt des Ventilsitzes 21 angeordnet. Der Absperrkörper 19 umfasst eine umlaufende Dichtkante 19x. Die umlaufende Dichtkante 19x liegt in der Schließstellung dichtend an dem konischen Abschnitt des Ventilsitzes 21 an, wobei in der Spülund/oder Warte-/Andrückstellung ein Andrück- bzw. Ringspalt 50 zwischen Dichtkante 19x und konischem Abschnitt des Ventilsitzes 21 ausgebildet wird. Die in Figur 18A gezeigte Dichtkante 19x ist am freien Ende des Absperrkörpers 19 angeordnet.

Figur 18B zeigt ein Ausführungsbeispiel gemäß der Erfindung, insbesondere schematisch eine vergrößerte Ansicht einer Ausführungsform nach dem Radialspalt-Prinzip, insbesondere eine andere modifizierte Stange 29 (bzw. Ausgleichselement) und/oder einen anderen modifizierten Absperrkörper 19 im Bereich des Ventilsitzes 21. Der Absperrkörper 19 umfasst einen ersten konischen Abschnitt 19a, einen zweiten konischen Abschnitt 19b und einen zylinderförmigen Abschnitt 19c, der zwischen dem ersten und zweiten konischen Abschnitt 19a, 19b angeordnet ist. Der erste konische Abschnitt 19a erstreckt sich von der Stange 29 bzw. dem Ausgleichselement zu dem zylinderförmigen Abschnitt 19c, wobei der zweite konische Abschnitt 19b am freien Ende des Absperrkörpers 19 angeordnet ist. Der erste und zweite konische Abschnitt 19a, 19b weitet sich jeweils vorzugsweise zur Farbleitung 5 hin auf. Der Ventilsitz 21 umfasst einen zylinderförmigen Abschnitt und einen konischen Abschnitt, der sich vorzugsweise zur Farbleitung 5 hin aufweitet. Der konische Abschnitt des Ventilsitzes 21 ist am freien Ende des Ventilsitzes 21 angeordnet, wobei der zylinderförmige Abschnitt des Ventilsitzes 21 in Figur 18B koaxial unmittelbar über dem konischen Abschnitt des Ventilsitzes 21 angeordnet ist. Der Durchmesser des zylinderförmigen Abschnitts 19c des Absperrkörpers 19 ist größer als der Durchmesser der Stange 29 bzw. des Ausgleichselements. Der zylinderförmige Abschnitt 19c des Absperrkörpers 19 ist vorgesehen, um mit dem zylinderförmigen Abschnitt des Ventilsitzes 21 einen sich axial erstreckenden Ringspalt 60 auszubilden, der über seine axiale Erstreckung "a" ein im Wesentlichen konstantes Spaltmaß bzw. eine konstante Spaltbreite aufweist. Vorzugsweise verläuft der sich axial erstreckende Ringspalt 60 koaxial und parallel zu der Kolbenstange 20, der Stange 29 bzw. dem Ausgleichselement. Die in Figur 18B gezeigte Dichtkante 19x ist am freien Ende des Absperrkörpers 19 angeordnet.

Figur 18C zeigt ein nicht erfindungsgemäßes Ausführungsbeispiel, insbesondere schematisch eine vergrößerte Ansicht einer Ausführungsform nach dem Radialspalt-Prinzip, insbesondere eine wiederum andere modifizierte Stange 29 (bzw. Ausgleichselement) und/oder einen wiederum anderen modifizierten Absperrkörper 19 im Bereich eines modifizierten Ventilsitzes 21. Der Absperrkörper 19 umfasst einen konischen Abschnitt 19a und einen zylinderförmigen Abschnitt 19c. Der konische Abschnitt 19a ist zwischen der Stange 29 bzw. dem Ausgleichselement und dem zylinderförmigen Abschnitt 19c angeordnet, wobei der zylinderförmige Abschnitt 19c des Absperrkörpers 19 am freien Ende des Absperrkörpers 19 vorgesehen ist. Der konische Abschnitt 19a weitet sich vorzugsweise zur Farbleitung 5 hin auf. Der Durchmesser des zylinderförmigen Abschnitts 19c des Absperrkörpers 19 ist größer als der Durchmesser der Stange 29. Ferner umfasst der Ventilsitz 21 einen zylinderförmigen Abschnitt und einen konischen Abschnitt, der sich vorzugsweise zur Farbleitung 5 hin aufweitet. Der zylinderförmige Abschnitt des Ventilsitzes 21 ist am freien Ende des Ventilsitzes 21 angeordnet, wobei der konische Abschnitt des Ventilsitzes 21 in Figur 18C koaxial unmittelbar über dem zylinderförmigen Abschnitt des Ventilsitzes 21 angeordnet ist. Der Absperrkörper 19 umfasst eine umlaufende Dichtkante 19x. Die umlaufende Dichtkante 19x liegt in der Schließstellung dichtend an dem konischen Abschnitt des Ventilsitzes 21 an. Der zylinderförmige Abschnitt 19c des Absperrkörpers 19 ist vorgesehen, um mit dem zylinderförmigen Abschnitt des Ventilsitzes 21 einen sich axial erstreckenden Ringspalt 60 auszubilden, der über seine axiale Erstreckung "a" ein im Wesentlichen konstantes Spaltmaß bzw. eine konstante Spaltbreite aufweist. Vorzugsweise verläuft der sich axial erstreckende Ringspalt 60 koaxial und parallel zu der Kolbenstange 20 und/oder der Stange 29 bzw. dem Ausgleichselement. Die in Figur 18C gezeigte Dichtkante 19x ist axial hinter dem freien Ende des Absperrkörpers 19 angeordnet.

Im Vergleich zu der in Figur 18A gezeigten Ausführungsform sind die in den Figuren 18B und 18C gezeigten Ausführungsformen vorteilhafter, da sie bessere Farb-Druck-Verhältnisse bereitstellen. Bei der in Figur 18A gezeigten Ausführungsform ist es möglich, dass sich ein Teil des Farbdrucks auch hinter dem Absperrkörper aufbaut und dadurch die Kraft zum Schließen beim Andrückvorgang vermindert.

Bei der Ausführungsform gemäß Figur 18B und insbesondere der Ausführungsform gemäß Figur 18C können durch den längeren Weg der Stange beim Schließvorgang mit konstantem Spaltmaß während dieses Schließhubs Längentoleranzen der Ventilbauteile besser ausgeglichen werden (Vorteil: großer Stangen- bzw. Absperrkörperhub, einfacheres Einhalten von Fertigungstoleranzen). Durch den längeren Schließhub kann auch eine sichere und verbesserte Schließung der Ausführungsformen mit Schließkraftverstärker ermöglicht werden.

Das erfindungsgemäße Fluidventil zur Reduktion von Farbverlusten, insbesondere zur Reduktion von Farb-Andrückverlusten nach einem Farbwechsel, kann vorteilhaft an verschiedenen Positionen eingesetzt werden. Wie in Figur 19 gezeigt beispielsweise in einem Farbwechsler FW (siehe RF2-Position), in einer Dosierpumpe DP (z.B. anstelle der Position des Bypassventils BV), in einem Zerstäuber Z (siehe RF1-Position), Andrücken von Sonderfarbversorgungs-Systemen und weiteren Anwendungen, etc.. Ferner kann das Fluid- bzw. Farbstoppventil in einer Molchstation eingesetzt werden. Bevorzugt kann das Fluid- bzw. Farbstoppventil (insbesondere immer) zum Entlüften von Farb- bzw. Beschichtungsmittelkanälen beim Andrücken der Farbe und selbsttätigen Schließen beim Eintreffen verwendet werden, mit dem Ziel, Farbverluste zu reduzieren oder bestenfalls zu vermeiden. Darüber hinaus sind eine Vielzahl anderer Einsatzmöglichkeiten möglich.

### Bezugszeichenliste:

- 1: Lackieranlage
- 2: Rotationszerstäuber
- 3: Glockenteller
- 4: Sprühstrahl
- 5: Farbleitung
- 6: Hauptnadelventil
- 7: Rückführleitung
- 8: Rückführventil
- 9: Lichtquelle
- 10: Sensor
- 11: Steuereinheit
- 12: Zylinder
- 13: Kolben
- 14: Dichtung
- 15: Druckluftanschluss
- 16: Druckluftanschluss
- 17: Spiralfeder
- 18: Spiralfeder
- 19: Absperrkörper
- 20: Ventilnadel bzw. Kolbenstange
- 21: Ventilsitz
- 22: Ventilschieber
- 23: Membran
- 24: Ausgleichsbohrung
- 25: Vorsteuerventil
- 26: Anschlagplatte
- 27: Mitnehmer
- 28: Auflage
- 29: Stange
- 30: Spiralfeder
- 31: Anschlag
- 32: Anschlagplatte
- 33: Mitnehmerstift
- 34: Arretierungselement
- 35a: Basis
- 35b: Arretierungshebel
- 36: Schaltabschnitt
- 37: Arretierungsabschnitt
- 38: Membranhalterung
- 39: Schaltelement
- 40: Anlage-, Auflager-, bzw. Anschlagteil
- 50,: 60 Ring-/Andrückspalt (Warte-/Andrückstellung)
- 51: Ringspalt (Öffnungs-/Spülstellung)
- 19a,: 19b konischer Abschnitt des Absperrkörpers
- 19c: zylinderförmiger Abschnitt des Absperrkörpers
- 19x: umlaufende Dichtkante des Absperrkörpers
- FW: Farbwechsler
- DP: Dosierpumpe
- BV: Bypassventil
- RF: Rückführung
- HV: Hauptnadelventil
- Z: Zerstäuber

## Patentansprüche

1. Fluidventil (8), insbesondere Rückführventil (8) zur Rückführung von Restfarbe, Spülmittel, Luft und/oder Druckluft aus einer Farbleitung (5) bei einem Farbwechsel in einer Lackieranlage (1), insbesondere beim Andrücken einer neuen Farbe bei einem Farbwechsel, mit
a) einer Öffnungsstellung, in der das Fluidventil (8) zumindest teilweise geöffnet ist, insbesondere zum Spülen der Farbleitung (5) mit dem Spülmittel und zum Andrücken der Farbleitung (5) mit einer neuen Farbe bei dem Farbwechsel, und
b) einer Schließstellung, in der das Fluidventil (8) geschlossen ist, insbesondere zum Applizieren der neuen Farbe nach dem Farbwechsel,
c) wobei das Fluidventil (8) zwischen der Öffnungsstellung und der Schließstellung verstellbar ist,
d) wobei das Fluidventil (8) in Abhängigkeit von dem eingangsseitig anstehenden Fluid eigenmediumbetätigt in die Schließstellung schaltet und/oder Einfluss auf das Durchflussverhalten nimmt,
e) wobei der Schaltvorgang des Fluidventils (8) durch die Viskosität des eingangsseitig anstehenden Fluids steuerbar ist,
f) wobei das Fluidventil (8) als Membranventil ausgeführt ist mit einer elastischen Membran (23), die einen Absperrkörper (19) trägt, und
g) wobei der Absperrkörper (19) einen ersten konischen Abschnitt (19a) und einen zweiten konischen Abschnitt (19b) umfasst, wobei ein zylinderförmiger Abschnitt (19c) des Absperrkörpers (19) zwischen dem ersten konischen Abschnitt (19a) und dem zweiten konischen Abschnitt (19b) des Absperrkörpers (19) angeordnet ist, und mit
h) einem Zylinder (12),
i) einem Kolben (13), der in dem Zylinder verschiebbar ist,
j) wobei der Absperrkörper (19) von dem Kolben (13) zwischen der Schließstellung und der Öffnungsstellung bewegt wird, und
k) einem Ventilsitz (21), wobei der Absperrkörper (19) den Ventilsitz (21) in der Schließstellung verschließt, wohingegen der Absperrkörper (19) den Ventilsitz (21) in der Öffnungsstellung öffnet.

2. Fluidventil (8) nach Anspruch 1,
**dadurch gekennzeichnet,**
a) **dass** das Fluidventil (8) ein Rückführventil (8) ist, um bei einem Farbwechsel in einer Lackieranlage Restfarbe, Spülmittel, Luft und/oder Druckluft aus einer Farbleitung (5) in eine Rückführung zu leiten,
b) **dass** das Rückführventil (8) konstruktionsbedingt zwischen Farbe einerseits und Druckluft und lufthaltigem Farbschaum andererseits unterscheidet,
c) **dass** das Rückführventil (8) selbständig und konstruktionsbedingt in die Schließstellung schaltet, wenn an dem Rückführventil (8) eingangsseitig Farbe ansteht, und
d) **dass** das Rückführventil (8) selbständig und konstruktionsbedingt in die Öffnungsstellung schaltet und/oder in der Öffnungsstellung verbleibt, wenn an dem Rückführventil (8) eingangsseitig Luft und/oder Druckluft oder Farbschaum ansteht.

3. Fluidventil (8) nach einem der vorhergehenden Ansprüche, **dadurch gekennzeichnet, dass** das Fluidventil (8) in Abhängigkeit von der Viskosität des eingangsseitig anstehenden Fluids zwischen der Öffnungsstellung und der Schließstellung umschaltet.

4. Fluidventil (8) nach einem der vorhergehenden Ansprüche, **dadurch gekennzeichnet,**
a) **dass** das Fluidventil (8) in der Öffnungsstellung maximal geöffnet ist, insbesondere zum Spülen der Farbleitung (5) mit einem maximalen Spülmittelstrom,
b) **dass** das Fluidventil (8) zusätzlich zu der Öffnungsstellung und der Schließstellung eine Wartestellung aufweist,
c) **dass** das Fluidventil (8) in der Wartestellung zumindest teilweise geöffnet ist, insbesondere zum Warten auf die neue Farbe beim Andrücken der neuen Farbe, und
d) **dass** das Fluidventil (8) nur aus der Wartestellung, aber nicht aus der Öffnungsstellung selbständig in die Schließstellung schaltet.

5. Fluidventil (8) nach einem der vorhergehenden Ansprüche, **dadurch gekennzeichnet, dass** das Fluidventil (8) auch durch einen Ventilantrieb fremdbetätigt steuerbar ist, insbesondere fremdmediumbetätigt.

6. Fluidventil (8) nach Anspruch 5, **gekennzeichnet durch**
a) einen ersten Steuereingang (15), insbesondere in Form eines ersten Steuerluftanschlusses, über den das Fluidventil (8) fremdbetätigt in die Schließstellung geschaltet werden kann, und/oder
b) einen zweiten Steuereingang (16), insbesondere in Form eines zweiten Steuerluftanschlusses, über den das Fluidventil (8) fremdbetätigt in die Öffnungsstellung geschaltet werden kann.

7. Fluidventil (8) nach Anspruch 6,
**dadurch gekennzeichnet,**
a) **dass** der erste Steuerluftanschluss (15) auf einer Seite des Kolbens (13) in den Zylinder (12) mündet, um das Fluidventil (8) pneumatisch in die Schließstellung zu schalten, und
b) **dass** der zweite Steuerluftanschluss (16) auf der anderen Seite des Kolbens (13) in den Zylinder (12) mündet, um das Fluidventil (8) pneumatisch in die Öffnungsstellung und/oder die Wartestellung zu schalten.

8. Fluidventil (8) nach einem der vorhergehenden Ansprüche, **dadurch gekennzeichnet,**
a) **dass** das Fluidventil (8) zum Umschalten in die Schließstellung eine eigenmediumbetätigte Schließkraft erzeugt, und
b) einen integrierten Schließkraftverstärker zur Verstärkung der eigenmediumbetätigten Schließkraft aufweist.

9. Fluidventil (8) nach Anspruch 8, **dadurch gekennzeichnet,**
a) **dass** der Schließkraftverstärker fremdmediumbetätigt arbeitet, insbesondere pneumatisch, oder
b) **dass** der Schließkraftverstärker mittels einer Feder- und/oder Vorspannmechanik arbeitet.

10. Fluidventil (8) nach Anspruch 8 oder 9, **dadurch gekennzeichnet, dass** der Schließkraftverstärker in Abhängigkeit von dem eingangsseitig anstehenden Fluid eigenmediumbetätigt aktivierbar ist, um eine Schließkraftverstärkung zu erzielen.

11. Fluidventil (8) nach einem der Ansprüche 8 bis 10, **dadurch gekennzeichnet,**
a) **dass** der Schließkraftverstärker ein Verstärkungsventil aufweist,
b) **dass** das Verstärkungsventil des Schließkraftverstärkers den in den Zylinder (12) mündenden und zum Schließen des Fluidventils (8) dienenden ersten Steuerluftanschluss (15) wahlweise öffnet oder schließt,
c) **dass** der an dem ersten Steuerluftanschluss (15) anliegende Druck die Schließkraft verstärkt, wenn das Verstärkungsventil geöffnet ist.

12. Fluidventil (8) nach Anspruch 11,
**dadurch gekennzeichnet,**
a) **dass** das Verstärkungsventil ein Schieberventil ist und einen Ventilschieber (22) aufweist, der mit dem Kolben (13) gekoppelt ist,
b) **dass** der Ventilschieber (22) den ersten Steuerluftanschluss verschließt, wenn sich der Kolben (13) des Fluidventils (8) in der Öffnungsstellung befindet,
c) **dass** der Ventilschieber (22) den ersten Steuerluftanschluss (15) freigibt, wenn sich der Kolben (13) für einen Bruchteil seines Hubs aus der Öffnungsstellung in Richtung der Schließstellung bewegt hat, so dass dann die Kraftverstärkung wirkt.

13. Fluidventil (8) nach Anspruch 11 oder 12, **dadurch gekennzeichnet, dass** der erste Steuerluftanschluss (15) radial in die Mantelfläche des Zylinders (12) mündet.

14. Fluidventil (8) nach Anspruch 11,
**dadurch gekennzeichnet,**
a) **dass** der erste Steuerluftanschluss (15) axial in eine Stirnfläche des Zylinders (12) mündet,
b) **dass** der erste Steuerluftanschluss (15) von dem Kolben (13) des Fluidventils (8) unmittelbar oder mittelbar verschlossen oder geöffnet wird,
c) **dass** die Mündungsöffnung des ersten Steuerluftanschlusses einen kleineren Querschnitt aufweist als der Kolben (13), wobei das Verhältnis der Querschnitte einen Kraftverstärkungsfaktor definiert.

15. Fluidventil (8) nach einem der Ansprüche 8 bis 14, **dadurch gekennzeichnet,**
a) **dass** der Schließkraftverstärker ein druckgesteuertes Vorsteuerventil (25) aufweist,
b) **dass** das Vorsteuerventil (25) eine erste Steuerluftleitung mit dem ersten Steuerluftanschluss des Fluidventils (8) verbindet, so dass der Druck in der ersten Steuerluftleitung die Schließbewegung des Fluidventils (8) unterstützt, wenn das Vorsteuerventil (25) geöffnet ist,
c) **dass** das Vorsteuerventil (25) einen Steuereingang aufweist, der mit einer Zuleitung (5) des Fluidventils (8) verbunden ist, so dass das Vorsteuerventil (25) öffnet, wenn sich ein Druck in der Zuleitung (5) des Fluidventils (8) aufbaut.

16. Fluidventil (8) nach einem der vorhergehenden Ansprüche,
**dadurch gekennzeichnet,**
a) **dass** der Absperrkörper (19) mit dem Kolben (13) gekoppelt ist,
b) **dass** der Kolben (13) in dem Zylinder (12) verschiebbar ist,
c) **dass** auf einer Seite des Kolbens (13) ein erster Druckluftanschluss (15) in den Zylinder mündet, um das Fluidventil (8) pneumatisch zu schließen, und/oder
d) **dass** auf der anderen Seite des Kolbens (13) ein zweiter Druckluftanschluss in den Zylinder (12) mündet, um das Fluidventil (8) pneumatisch zu öffnen.

17. Fluidventil (8) nach einem der vorhergehenden Ansprüche, **dadurch gekennzeichnet, dass** der Kolben (13) einseitig oder beidseitig mit einer Federkraft einer Feder (17, 18) beaufschlagt ist.

18. Fluidventil (8) nach einem der vorhergehenden Ansprüche, **dadurch gekennzeichnet, dass** das Fluidventil (8) einen Absperrkörper (19) vorzugsweise mit einer Lochscheibe aufweist.

19. Fluidventil (8) nach einem der vorhergehenden Ansprüche, **dadurch gekennzeichnet, dass** das Fluidventil (8) einen Stellungssensor aufweist, der erkennt, ob sich das Fluidventil (8) in der Schließstellung befindet, insbesondere in der Öffnungsstellung oder in der Schließstellung oder in der Schließstellung oder in der Wartestellung befindet.

20. Fluidventil (8) nach einem der vorhergehenden Ansprüche,
**dadurch gekennzeichnet,**
a) **dass** der Absperrkörper (19) durch ein Ausgleichselement mit dem Kolben (13) verbunden ist,
b) **dass** das Ausgleichselement ein Spiel zwischen dem Absperrkörper (19) und dem Kolben (13) zulässt, und
c) **dass** das Spiel des Ausgleichselements größer ist als die Bewegung des Absperrkörpers (19) von der Öffnungsstellung in die Schließstellung, so dass sich der Absperrkörper (19) ohne eine Bewegung des Kolbens eigenmediumbetätigt von der Öffnungsstellung in die Schließstellung bewegen kann.

21. Fluidventil (8) nach einem der Ansprüche 8 bis 20, **dadurch gekennzeichnet, dass** der Schließkraftverstärker eine Arretierungsmechanik umfasst, die in Abhängigkeit von dem eingangsseitig anstehenden Fluid eigenmediumbetätigt schaltbar ist und die Arretierungsmechanik
a) ein Arretierungselement (34) umfasst,
a1) das zumindest abschnittsweise elastisch ausgebildet ist;
a2) das eine Basis (35a) aufweist, die an einer Kolbenstange (20) angebracht ist, und zumindest einen Arretierungshebel (35b), der von der Basis (35a) vorragt; und
a3) das zumindest einen Arretierungsabschnitt (37) aufweist zur Ausbildung einer Arretierung des Arretierungsabschnitts (37) und zumindest einen Schaltabschnitt (36) zum Zusammenwirken mit einem Schaltelement (39), um ein Entriegeln oder Verriegeln der Arretierung des Arretierungsabschnitts (37) zu erzielen; und
b) ein Schaltelement (39) umfasst zum Entriegeln oder Verriegeln der Arretierung des Arretierungsabschnitts (37) .

22. Fluidventil (8) nach Anspruch 21, **dadurch gekennzeichnet, dass**
a) das Schaltelement (39) vorgesehen ist, sich axial (PA) in Richtung Arretierungselement (34) zu bewegen, um die Schließstellung und die Schließkraftverstärkung zu erzielen und um die Arretierung des Arretierungsabschnitts (37) zu entriegeln, insbesondere, indem das Arretierungselement (34) aus seiner Ursprungsform radial verformt wird; und
b) das Schaltelement (39) vorgesehen ist, sich axial in Richtung weg vom Arretierungselement (34) zu bewegen, um die Wartestellung oder die Öffnungsstellung zu erzielen und um die Arretierung des Arretierungsabschnitts (37) zu verriegeln, insbesondere, indem das Arretierungselement (34) in seine Ursprungsform zurücckehrt.

23. Fluidventil (8) nach einem der vorhergehenden Ansprüche, **dadurch gekennzeichnet, dass** ein Ventilsitz (21) bereitgestellt ist, der einen konischen Abschnitt und zumindest einen zylinderförmigen Abschnitt umfasst.

24. Fluidventil (8) nach Anspruch 23, **dadurch gekennzeichnet, dass**
a) der zylinderförmige Abschnitt (19c) des Absperrkörpers (19) vorgesehen ist, um mit dem zylinderförmigen Abschnitt des Ventilsitzes (21) einen Ringspalt (60) auszubilden, der über seine axiale Erstreckung (a) ein im Wesentlichen konstantes Spaltmaß aufweist; und/oder
b) der Absperrkörper (19) eine umlaufende Dichtkante (19x) umfasst, die am freien Ende des Absperrkörpers (19) oder axial hinter dem freien Ende des Absperrkörpers (19) angeordnet ist.

25. Lackieranlage (1), insbesondere zur Lackierung von Kraftfahrzeugkarosseriebauteilen, mit
a) einem Applikationsgerät (2) zum Applizieren eines Beschichtungsmittels,
b) einer Farbleitung (5) zur Zuführung des Beschichtungsmittels zu dem Applikationsgerät (2),
c) einem Hauptnadelventil (6), das in der Farbleitung (5) stromaufwärts vor dem Applikationsgerät (2) angeordnet ist und das Beschichtungsmittel wahlweise freigibt oder sperrt,
d) einer Rückführleitung (7) zur Rückführung von restlichem Beschichtungsmittel, Spülmittel, Luft und/oder Druckluft bei einem Farbwechsel, wobei die Rückführleitung stromaufwärts vor dem Hauptnadelventil (6) oder stromabwärts hinter dem Hauptnadelventil von der Farbleitung (5) abzweigt,
e) einem Rückführventil (8), das in der Rückführleitung (7) angeordnet ist,
**dadurch gekennzeichnet,**
f) **dass** das Rückführventil (8) ein Fluidventil nach einem der vorhergehenden Ansprüche ist, und/oder
g) **dass** das Hauptnadelventil ein Fluidventil nach einem der vorhergehenden Ansprüche ist.

26. Verwendung eines Fluidventils (8) nach einem der Ansprüche 1 bis 24
a) als Rückführventil (8) in einer Lackieranlage zum Rückführen von Restfarbe, Spülmittel, Farbschaum, Luft und/oder Druckluft aus einer Farbleitung (5) bei einem Farbwechsel, oder
b) als Hauptnadelventil in einem Zerstäuber.

## Claims

1. A fluid valve (8), in particular a return valve (8) for returning residual color, flushing agent, air and/or compressed air from a color line (5) during a color change in a painting system (1), in particular during loading of a new color during a color change, with
a) an opening position in which the fluid valve (8) is at least partially open, in particular for flushing the color line (5) with flushing agent and for loading the color line (5) with new color during the color change, and
b) a closing position in which the fluid valve (8) is closed, in particular for applying the new color after the color change,
c) wherein the fluid valve (8) is adjustable between the opening position and the closing position,
d) wherein the fluid valve (8) switches dependent on the fluid present on the inlet side own medium actuated to the closing position and/or influences the through flow behavior dependent on the fluid present on the inlet side own medium actuated,
e) wherein the switching process of the fluid valve (8) is controllable by the viscosity of the fluid present on the inlet side,
f) wherein the fluid valve (8) is realized as a membrane valve with an elastic membrane (23) which carries a shut-off body (19), and
g) wherein the shut-off body (19) includes a first conical portion (19a) and a second conical portion (19b), wherein a cylindrical portion (19c) of the shut-off body (19) is located between the first conical portion (19a) and the second conical portion (19b) of the shut-off body (19),
and with
h) a cylinder (12),
i) a piston (13) which is movable within the cylinder,
j) wherein the shut-off body (19) is moved by the piston (13) between the opening position and the closing position, and
k) a valve seat (21), wherein the shut-off body (19) closes the valve seat (21) in the closing position, whereas the shut-off body (19) opens the valve seat (21) in the opening position.

2. The fluid valve (8) according to Claim 1,
**characterized in that**
a) the fluid valve (8) is a return valve (8) to lead residual color, flushing agent, air and/or compressed air from a color line (5) during a color change in a painting system into a return system,
b) the return valve (8) differentiates based on its construction between color on the one hand and compressed air and air containing color foam on the other hand,
c) the return valve (8) autonomously and based on its construction switches into the closing position if color at the inlet side of the return valve (8) is present, and
d) the return valve (8) autonomously and based on its construction switches into the opening position and/or remains in the opening position if air and/or compressed air or color foam at the inlet side of the return valve (8) is present.

3. The fluid valve (8) according to any one of the preceding claims, **characterized in that** the fluid valve (8) switches between the opening position and the closing position dependent on the viscosity of the fluid present at the inlet side.

4. The fluid valve (8) according to any one of the preceding claims, **characterized in that**
a) the fluid valve (8) in the opening position is opened to the maximum, in particular for flushing the color line (5) with a maximum flushing agent stream,
b) the fluid valve (8) has a waiting position additionally to the opening position and the closing position,
c) the fluid valve (8) in the waiting position is at least partially open, in particular for waiting for the new color during loading the new color, and
d) the fluid valve (8) only switches from the waiting position, but not from the opening position autonomously into the closing position.

5. The fluid valve (8) according to any one of the preceding claims, **characterized in that** the fluid valve (8) is also controllable externally by a valve drive, in particular external medium actuated.

6. The fluid valve (8) according to Claim 5, **characterized by**
a) a first control input (15), in particular in the form of a first control air connection, over which the fluid valve (8) can be externally actuated into the closing position, and/or
b) a second control input (16), in particular in the form of a second control air connection, over which the fluid valve (8) can be externally actuated into the opening position.

7. The fluid valve (8) according to Claim 6, **characterized in that**
a) the first control air connection (15) opens on one side of the piston (13) into the cylinder (12) in order to switch the fluid valve (8) pneumatically into the closing position, and
b) the second control air connection (16) opens on the other side of the piston (13) into the cylinder (12) in order to switch the fluid valve (8) pneumatically into the opening position and/or waiting position.

8. The fluid valve (8) according to any one of the preceding claims, **characterized in that**
a) the fluid valve (8) generates an own medium actuated closing force for switching into the closing position, and
b) comprises an integrated closing force amplifier in order to amplify the own medium actuated closing force.

9. The fluid valve (8) according to Claim 8, **characterized in that**
a) the closing force amplifier operates external medium actuated, in particular pneumatically, or
b) the closing force amplifier operates by means of a spring and/or preload mechanism.

10. The fluid valve (8) according to Claim 8 or 9, **characterized in that** the closing force amplifier can be activated own medium actuated dependent on the fluid present at the inlet side, in order to achieve a closing force amplification.

11. The fluid valve (8) according to any one of the claims 8 to 10, **characterized in that**
a) the closing force amplifier has an amplifier valve,
b) the amplifier valve of the closing force amplifier selectively opens or closes the first control air connection (15) which opens into the cylinder (12) and serves for closing the fluid valve (8),
c) the pressure applied to the first control air connection (15) increases the closing force if the amplifier valve is opened.

12. The fluid valve (8) according to Claim 11, **characterized in that**
a) the amplifier valve is a sliding valve and comprises a valve slider (22) which is coupled with the piston (13),
b) the valve slider (22) closes the first control air connection if the piston (13) of the fluid valve (8) is in the opening position,
c) the valve slider (22) releases the first control air connection (15) if the piston (13) has moved a fraction of its stroke from the opening position in the direction of the closing position so that the force amplification acts.

13. The fluid valve (8) according to claim 11 or 12, **characterized in that** the first control air connection (15) radially opens into the lateral surface of the cylinder (12).

14. The fluid valve (8) according to Claim 11, **characterized in that**
a) the first control air connection (15) axially opens into an end face of the cylinder (12),
b) the first control air connection (15) is directly or indirectly closed or opened by the piston (13) of the fluid valve (8),
c) the opening mouth of the first control air connection has a smaller cross-section than the piston (13), wherein the ratio of the cross-sections defines a force amplification factor.

15. The fluid valve (8) according to any one of the claims 8 to 14, **characterized in that**
a) the closing force amplifier comprises a pressure controlled pilot valve (25),
b) the pilot valve (25) connects a first control air line with the first control air connection of the fluid valve (8) so that the pressure in the first control air line supports the closing movement of the fluid valve (8) when the pilot valve (25) is opened,
c) the pilot valve (25) has a control input which is connected with a feed line (5) of the fluid valve (8) so that the pilot valve (25) opens if a pressure builds up in the feed line (5) of the fluid valve (8).

16. The fluid valve (8) according to any one of the preceding claims, **characterized in that**
a) the shut-off body (19) is coupled with the piston (13),
b) the piston (13) is movable in the cylinder (12),
c) on one side of the piston (13) a first compressed air connection (15) opens into the cylinder in order to close the fluid valve (8) pneumatically, and/or
d) on the other side of the piston (13) a second compressed air connection opens into the cylinder (12) in order to open the fluid valve (8) pneumatically.

17. The fluid valve (8) according to any one of the preceding claims, **characterized in that** the piston (13) is applied with a spring force of a spring (17, 18) from one side or both sides.

18. The fluid valve (8) according to any one of the preceding claims, **characterized in that** the fluid valve (8) has a shut-off body (19) preferably with a perforated disc.

19. The fluid valve (8) according to any one of the preceding claims, **characterized in that** the fluid valve (8) has a position sensor which recognizes whether the fluid valve (8) is in the closing position, particularly in the opening position or in the closing position or in the closing position or in the waiting position.

20. The fluid valve (8) according to any one of the preceding claims, **characterized in that**
a) the shut-off body (19) is coupled with the piston (13) by a compensation element,
b) the compensation element allows a play between the shut-off body (19) and the piston (13), and
c) the play of the compensation element is larger than the movement of the shut-off body (19) from the opening position into the closing position so that the shut-off body (19) can move own medium actuated from the opening position into the closing position without movement of the piston.

21. The fluid valve (8) according to any one of the claims 8 to 20, **characterized in that** the closing force amplifier comprises an arrest mechanism which is switchable own medium actuated dependent on the fluid present at the inlet side and the arrest mechanism
a) includes an arrest element (34),
a1) which is at least partially elastic;
a2) which has a base (35a) fastened to a piston rod (20) and at least one arrest lever (35b) which projects from the base (35a); and
a3) which has at least one arrest portion (37) for formation of an arrest of the arrest portion (37) and at least one switching portion (36) for cooperating with a switching element (39) in order to achieve unlocking or locking of the arrest of the arrest portion (37); and
b) includes a switching element (39) for unlocking or locking the arrest of the arrest portion (37).

22. The fluid valve (8) according to Claim 21, **characterized in that**
a) the switching element (39) is provided to move axially (PA) in the direction of the arrest element (34) in order to achieve the closing position and the closing force amplification and to unlock the arrest of the arrest portion (37), in particular **in that** the arrest element (34) is deformed radially from its original form; and
b) the switching element (39) is provided to move axially in the direction away from the arrest element (34) in order to achieve the waiting position or the opening position and to lock the arrest of the arrest portion (37), in particular **in that** the arrest element (34) returns into its original form.

23. The fluid valve (8) according to any one of the preceding claims, **characterized in that** a valve seat (21) is provided which includes a conical portion and at least one cylindrical portion.

24. The fluid valve (8) according to Claim 23, **characterized in that**
a) the cylindrical portion (19c) of the shut-off body (19) is provided to form a ring gap (60) with the cylindrical portion of the valve seat (21), wherein the ring gap (60) has a substantially constant gap size over its axial extension (a); and/or
b) the shut-off body (19) includes a circumferential sealing edge (19x) which is located at the free end of the shut-off body (19) or axially behind the free end of the shut-off body (19).

25. A painting system (1), particularly for painting motor vehicle body parts, with
a) an application device (2) for applying a coating agent,
b) a color line (5) for feeding coating agent to the application device (2),
c) a main needle valve (6) which is located in the color line (5) upstream before the application device (2) and which selectively releases or blocks off the coating agent,
d) a return line (7) for returning residual coating agents, flushing agent, air and/or compressed air during a color change, wherein the return line branches off from the color line (5) upstream before the main needle valve (6) or downstream after the main needle valve,
e) a return valve (8) which is located in the return line (7),
**characterized in that**
f) the return valve (8) is a fluid valve (8) according to any one of the preceding claims, and/or
g) the main needle valve is a fluid valve according to any one of the preceding claims.

26. Use of a fluid valve (8) according to any one of the claims 1 to 24
a) as a return valve (8) in a painting system for returning residual color, flushing agent, color foam, air and/or compressed air from a color line (5) during a color change, or
b) as a main needle valve in an atomizer.

## Revendications

1. Soupape de fluide (8), plus particulièrement soupape de retour (8) pour le retour de résidus de peinture, de détergent, d'air et/ou d'air comprimé hors d'une conduite de peinture (5) lors d'un changement de couleur dans une installation de peinture (1), plus particulièrement lors de la mise sous pression d'une nouvelle peinture lors d'un changement de couleur, avec
a) une position d'ouverture dans laquelle la soupape de fluide (8) est au moins partiellement ouverte, plus particulièrement pour le rinçage de la conduite de peinture (5) avec le détergent et pour la mise sous pression de la conduite de peinture (5) avec une nouvelle couleur lors du changement de couleur et
b) une position de fermeture dans laquelle la soupape de fluide (8) est fermée, plus particulièrement pour l'application de la nouvelle couleur après le changement de couleur,
c) dans laquelle la soupape de fluide (8) peut être réglée entre la position d'ouverture et la position de fermeture,
d) dans laquelle la soupape de fluide (8) commute, de manière actionnée par son fluide propre, en fonction du fluide se trouvant à l'entrée, dans la position de fermeture et/ou exerce une influence sur le comportement du débit,
e) dans laquelle le processus de commutation de la soupape de fluide (8) peut être contrôlé à l'aide de la viscosité du fluide se trouvant à l'entrée,
f) dans laquelle la soupape de fluide (8) est conçue comme une soupape à membrane avec une membrane élastique (23) qui supporte un corps d'arrêt (19) et
g) dans laquelle le corps d'arrêt (19) comprend une première partie conique (19a) et une deuxième partie conique (19b), dans laquelle une partie cylindrique (19c) du corps d'arrêt (19) est disposée entre la première partie conique (19a) et la deuxième partie conique (19b) du corps d'arrêt (19),
et avec
h) un cylindre (12),
i) un piston (13), qui coulisse dans le cylindre,
j) dans laquelle le corps d'arrêt (19) est déplacé par le piston (13) entre la position de fermeture et la position d'ouverture et
k) un siège de soupape (21), dans laquelle le corps d'arrêt (19) obture le siège de soupape (21) dans la position de fermeture, tandis que le corps d'arrêt (19) ouvre la siège de soupape (21) dans la position d'ouverture.

2. Soupape de fluide (8) selon la revendication 1,
**caractérisée en ce que**
a) la soupape de fluide (8) est une soupape de retour (8) permettant de conduire, lors d'un changement de couleur dans une installation de peinture, des résidus de peinture, du détergent, de l'air et/ou de l'air comprimé hors d'une conduite de peinture (5) vers un retour,
b) la soupape de retour (8) distingue, du fait de sa construction, la peinture, d'une part et l'air comprimé et la mousse de peinture contenant de l'air d'autre part,
c) la soupape de retour (8) commute automatiquement et du fait de sa construction dans la position de fermeture lorsque de la peinture se trouve à l'entrée de la soupape de retour (8) et
d) la soupape de retour (8) commute automatiquement et du fait de sa construction dans la position d'ouverture et/ou reste dans la position d'ouverture lorsque de l'air et/ou de l'air comprimé ou de la mousse de peinture se trouve à l'entrée de la soupape de retour (8).

3. Soupape de fluide (8) selon l'une des revendications précédentes, **caractérisée en ce que** la soupape de fluide (8) commute entre la position d'ouverture et la position de fermeture en fonction de la viscosité du fluide se trouvant à l'entrée.

4. Soupape de fluide (8) selon l'une des revendications précédentes, **caractérisée en ce que**
a) la soupape de fluide (8) est ouverte au maximum dans la position d'ouverture, plus particulièrement pour le rinçage de la conduite de peinture (5) avec un débit de détergent maximal,
b) la soupape de fluide (8) présente, en plus de la position d'ouverture et de la position de fermeture, une position d'attente,
c) la soupape de fluide (8) est au moins partiellement ouverte dans la position d'attente, plus particulièrement afin d'attendre la nouvelle peinture lors de la mise sous pression de la nouvelle peinture et
d) la soupape de fluide (8) commute, uniquement à partir de la position d'attente, mais pas de la position d'ouverture, automatiquement dans la position de fermeture.

5. Soupape de fluide (8) selon l'une des revendications précédentes, **caractérisée en ce que** la soupape de fluide (8) peut également être contrôlée par un entraînement de soupape, plus particulièrement grâce à un actionnement à l'aide d'un fluide extérieur.

6. Soupape de fluide (8) selon la revendication 5, **caractérisée par**
a) une première entrée de commande (15), plus particulièrement sous la forme d'un premier raccord d'air de commande, par l'intermédiaire duquel la soupape de fluide (8) peut être commutée dans la position de fermeture à l'aide d'un actionnement extérieur et/ou
b) une deuxième entrée de commande (16), plus particulièrement sous la forme d'un deuxième raccord d'air de commande, par l'intermédiaire duquel la soupape de fluide (8) peut être commutée dans la position d'ouverture à l'aide d'un actionnement extérieur.

7. Soupape de fluide (8) selon la revendication 6,
**caractérisée en ce que**
a) le premier raccord d'air de commande (15) débouche sur un côté du piston (13) dans le cylindre (12), afin de commuter la soupape de fluide (8) de manière pneumatique dans la position de fermeture et
b) le deuxième raccord d'air de commande (16) débouche de l'autre côté du piston (13) dans le cylindre (12), afin de commuter la soupape de fluide (8) de manière pneumatique dans la position d'ouverture et/ou la position d'attente.

8. Soupape de fluide (8) selon l'une des revendications précédentes, **caractérisée en ce que**
a) la soupape de fluide (8) génère, pour la commutation dans la position de fermeture, une force de fermeture exercée par son propre fluide et
b) comprend un amplificateur de force de fermeture intégré pour l'amplification de la force de fermeture exercée par son propre fluide.

9. Soupape de fluide (8) selon la revendication 8, **caractérisée en ce que**
a) l'amplificateur de force de fermeture fonctionne à l'aide d'un actionnement par un fluide extérieur, plus particulièrement de manière pneumatique ou
b) l'amplificateur de force de fermeture fonctionne au moyen d'un mécanisme à ressort et/ou d'un mécanisme de précontrainte.

10. Soupape de fluide (8) selon la revendication 8 ou 9, **caractérisée en ce que** l'amplificateur de force de fermeture peut être activé à l'aide d'un actionnement par son propre fluide en fonction du fluide se trouvant à l'entrée, afin d'obtenir une amplification de la force de fermeture.

11. Soupape de fluide (8) selon l'une des revendications 8 à 10, **caractérisée en ce que**
a) l'amplificateur de force de fermeture comprend une soupape d'amplification,
b) la soupape d'amplification de l'amplificateur de force de fermeture ouvre ou ferme le premier raccord d'air de commande (15) débouchant dans le cylindre (12) et permettant la fermeture de la soupape à fluide (8),
c) la pression régnant au niveau du premier raccord d'air de commande (15) amplifie la force de fermeture lorsque la soupape d'amplification est ouverte.

12. Soupape de fluide (8) selon la revendication 11,
**caractérisée en ce que**
a) la soupape d'amplification est une soupape à tiroir et comprend un tiroir de soupape (22) qui est couplé avec le piston (13),
b) le tiroir de soupape (22) obture le premier raccord d'air de commande lorsque le piston (13) de la soupape de fluide (8) se trouve dans la position d'ouverture,
c) le tiroir de soupape (22) libère le premier raccord d'air de commande (15) lorsque le piston (13) s'est déplacé, d'une fraction de sa course, de la position d'ouverture en direction de la position de fermeture, de façon à provoquer une amplification de la force.

13. Soupape de fluide (8) selon la revendication 11 ou 12, **caractérisée en ce que** le premier raccord d'air de commande (15) débouche radialement dans la surface périphérique du cylindre (12).

14. Soupape de fluide (8) selon la revendication 11,
**caractérisée en ce que**
a) le premier raccord d'air de commande (15) débouche axialement dans une surface frontale du cylindre (12),
b) le premier raccord d'air de commande (15) est fermé ou ouvert directement ou indirectement par le piston (13) de la soupape de fluide (8),
c) l'ouverture d'embouchure du premier raccord d'air de commande présente une section transversale plus petite que le piston (13), dans laquelle le rapport entre les sections transversales définit un facteur d'amplification de force.

15. Soupape de fluide (8) selon l'une des revendications 8 à 14, **caractérisée en ce que**
a) l'amplificateur de force de fermeture comprend une soupape pilote (25) contrôlé par la pression,
b) la soupape pilote (25) relie une première conduite d'air de commande avec le premier raccord d'air de commande de la soupape de fluide (8), de sorte que la pression dans la première conduite d'air de commande favorise le mouvement de fermeture de la soupape de fluide (8) lorsque la soupape pilote (25) est ouverte,
c) la soupape pilote (25) comprend une entrée de commande qui est reliée avec une conduite d'entrée (5) de la soupape de fluide (8), de sorte que la soupape pilote (25) s'ouvre lorsqu'une pression augmente dans la conduite d'entrée (5) de la soupape de fluide (8).

16. Soupape de fluide (8) selon l'une des revendications précédentes,
**caractérisée en ce que**
a) le corps d'arrêt (19) est couplé avec le piston (13),
b) le piston (13) coulisse dans le cylindre (12),
c) sur un côté du piston (13), un premier raccord d'air comprimé (15) débouche dans le cylindre, afin de fermer la soupape de fluide (8) de manière pneumatique et/ou
d) sur l'autre côté du piston (13), un deuxième raccord d'air comprimé débouche dans le cylindre (12), afin d'ouvrir la soupape de fluide (8) de manière pneumatique.

17. Soupape de fluide (8) selon l'une des revendications précédentes, **caractérisée en ce que** le piston (13) est sollicité, d'un côté ou des deux côtés, avec une force élastique d'un ressort (17, 18).

18. Soupape de fluide (8) selon l'une des revendications précédentes, **caractérisée en ce que** la soupape de fluide (8) comprend un corps d'arrêt (19), de préférence avec une rondelle perforée.

19. Soupape de fluide (8) selon l'une des revendications précédentes, **caractérisée en ce que** la soupape de fluide (8) comprend un capteur de position qui détecte si la soupape de fluide (8) se trouve dans la position de fermeture, plus particulièrement dans la position d'ouverture ou dans la position de fermeture ou dans la position de fermeture ou dans la position d'attente.

20. Soupape de fluide (8) selon l'une des revendications précédentes,
**caractérisée en ce que**
a) le corps d'arrêt (19) est relié, à l'aide d'un élément de compensation, avec le piston (13),
b) l'élément de compensation laisse un jeu entre le corps d'arrêt (19) et le piston (13) et
c) le jeu de l'élément de compensation est supérieur au déplacement du corps d'arrêt (19) de la position d'ouverture vers la position de fermeture, de sorte que le corps d'arrêt (19) peut se déplacer, grâce à l'actionnement d'un fluide propre, de la position d'ouverture vers la position de fermeture, sans le déplacement du piston.

21. Soupape de fluide (8) selon l'une des revendications 8 à 20, **caractérisée en ce que** l'amplificateur de force de fermeture comprend un mécanisme d'arrêt qui peut être commuté, en fonction du fluide se trouvant à l'entrée, grâce à un actionnement par un fluide propre et le mécanisme d'arrêt
a) comprend un élément d'arrêt (34)
a1) qui est réalisé de manière élastique, au moins à certains endroits ;
a2) qui comprend une base (35a) qui est montée sur une tige de piston (20) et au moins un levier d'arrêt (35b) qui dépasse de la base (35a) ; et
a3) qui comprend au moins une portion d'arrêt (37) pour la réalisation d'un arrêt de la portion d'arrêt (37) et au moins une portion de commutation (36) pour l'interaction avec un élément de commutation (39), afin d'obtenir un déverrouillage ou un verrouillage de l'arrêt de la portion d'arrêt (37) ; et
b) comprend un élément de commutation (39) pour le déverrouillage ou le verrouillage de l'arrêt de la portion d'arrêt (37).

22. Soupape de fluide (8) selon la revendication 21, **caractérisée en ce que**
a) l'élément de commutation (39) est conçu pour se déplacer axialement (PA) en direction de l'élément d'arrêt (34), afin d'obtenir la position de fermeture et l'amplification de la force de fermeture et afin de déverrouiller l'arrêt de la portion d'arrêt (37), plus particulièrement grâce au fait que l'élément d'arrêt (34) est déformé radialement à partir de sa forme initiale ; et
b) l'élément de commutation (39) est conçu pour s'éloigner axialement de l'élément d'arrêt (34) afin d'obtenir la position d'attente ou la position d'ouverture et afin de verrouiller l'arrêt de la portion d'arrêt (37), plus particulièrement grâce au fait que l'élément d'arrêt (34) reprend sa forme initiale.

23. Soupape de fluide (8) selon l'une des revendications précédentes, **caractérisée en ce qu'**un siège de soupape (21) est mis à disposition, qui comprend une partie conique et au moins une partie cylindrique.

24. Soupape de fluide (8) selon la revendication 23, **caractérisée en ce que**
a) la partie cylindrique (19c) du corps d'arrêt (19) est conçue pour former, avec la partie cylindrique du siège de soupape (21), un interstice annulaire (60), qui présente, sur son extension axiale (a), une dimension d'interstice globalement constante ; et/ou
b) le corps d'arrêt (19) comprend une arête d'étanchéité périphérique (19x) qui est disposée à l'extrémité libre du corps d'arrêt (19) ou axialement derrière l'extrémité libre du corps d'arrêt (19).

25. Installation de peinture (1), plus particulièrement pour la peinture de composants de carrosseries de véhicules automobiles, avec
a) un appareil d'application (2) pour l'application d'un produit de revêtement,
b) une conduite de peinture (5) pour l'introduction du produit de revêtement dans l'appareil d'application (2),
c) une soupape à pointeau principale (6) qui est disposée dans la conduite de peinture (5) en amont de l'appareil d'application (2) et qui laisse passer ou bloque le produit de revêtement,
d) une conduite de retour (7) pour le retour des résidus du produit de revêtement, du détergent, de l'air et/ou de l'air comprimé lors d'un changement de couleur, dans lequel la conduite de retour bifurque de la conduite de peinture (5) en amont de la soupape à pointeau principale (6) ou en aval de la soupape à pointeau principale,
e) une soupape de retour (8) qui est disposée dans la conduite de retour (7), **caractérisée en ce que**
f) la soupape de retour (8) est une soupape de fluide selon l'une des revendications précédentes et/ou
g) la soupape à pointeau principale est une soupape de fluide selon l'une des revendications précédentes.

26. Utilisation d'une soupape de fluide (8) selon l'une des revendications 1 à 24
a) en tant que soupape de retour (8) dans une installation de peinture pour le retour des résidus de peinture, du détergent, de la mousse de peinture, de l'air et/ou de l'air comprimé hors d'une conduite de peinture (5) lors d'un changement de couleur ou
b) en tant que soupape à pointeau principale dans un pulvérisateur.
